# EUROPEAN PATENT APPLICATION

(11) **EP 4 749 443 A1**
(43) Date of publication of application: **27.05.2026**
(21) Application number: 24884113.2
(22) Date of filing: 12.08.2024
(51) Int. Cl.: G06F 9/451, G06F 3/0489

(54) **INTERFACE DISPLAY METHOD, ELECTRONIC DEVICE AND STORAGE MEDIUM**

(30) Priority: 03.11.2023 CN 202311471933; 27.11.2023 CN 202311604267
(71) Applicant: Honor Device Co., Ltd., Shenzhen, Guangdong 518040 (CN)
(72) Inventor: ZHANG, Taolin, Shenzhen, Guangdong 518040 (CN); SHEN, Cuo, Shenzhen, Guangdong 518040 (CN); HUANG, Liwei, Shenzhen, Guangdong 518040 (CN)
(74) Representative: Henselmann, Alexander Gerhard
(86) International application number: PCT/CN2024/111543
(87) International publication number: WO 2025/092106

(57) **Abstract**

Embodiments of this application relate to the field of terminals, and in particular, to an interface display method, an electronic device, and a storage medium. The method includes: An electronic device displays a first interface. Then the electronic device displays a second interface in response to a search operation on the first interface. The second interface includes a recommended search result area, a display location of the recommended search result area is at the bottom of the second interface, and the recommended search result area includes a first interface element. Then, in response to a first operation on the first interface element, the electronic device opens a search result corresponding to the first interface element. In the foregoing method, on the second interface displayed by the electronic device, the display location of the recommended search result area is at the bottom of the second interface, and the display location of the recommended search result area being at the bottom of the second interface conforms to a one-hand operation habit of a user. In this way, a process of using a search interface by the user can be simplified, to enable the user to operate the electronic device with one hand, and improve user experience.

## Description

This application claims priorities to Chinese Patent Application No. 202311471933.4, filed with the China National Intellectual Property Administration on November 3, 2023 and entitled "INTERFACE DISPLAY METHOD AND ELECTRONIC DEVICE", and to Chinese Patent Application No. 202311604267.7, filed with the China National Intellectual Property Administration on November 27, 2023 and entitled "INTERFACE DISPLAY METHOD, ELECTRONIC DEVICE, AND STORAGE MEDIUM", both of which are incorporated herein by reference in their entireties.

### TECHNICAL FIELD

Embodiments of this application relate to the field of terminals, and in particular, to an interface display method, an electronic device, and a storage medium.

### BACKGROUND

With development of terminal technologies, electronic devices have become a part of people's work and life, and there is an increasing quantity of applications on the electronic devices. People may use the applications on the electronic devices to meet daily work and life requirements.

Because there are many applications on an electronic device, it takes time for a user to open an application by tapping an application icon on a desktop or in an application menu. Therefore, the user may search for, select, and open an application by using a search interface of the electronic device.

Currently, a process of using a search interface by a user is complex. This is not conducive to one-hand operations by the user, and user experience is poor.

### SUMMARY

Embodiments of this application provide an interface display method, an electronic device, and a storage medium, to simplify a process of using a search interface by a user, enable the user to operate an electronic device with one hand, and improve user experience.

To achieve the foregoing objective, the following technical solutions are used in embodiments of this application.

According to a first aspect, an interface display method is provided. The method may be applied to an electronic device, and the method includes: The electronic device displays a first interface. Then the electronic device displays a second interface in response to a search operation on the first interface. The search operation includes entering search content, the second interface is an interface for displaying a search result obtained based on the search content, and the search result includes an application search result and an application data search result. The second interface includes a recommended search result area. A display location of the recommended search result area is at the bottom of the second interface. The recommended search result area includes a first interface element. The first interface element includes an interface element of the application search result, or an interface element of the application search result and an interface element of the application data search result. Then, in response to a first operation on the first interface element, the electronic device opens a search result corresponding to the first interface element.

It can be understood that the recommendation result is obtained by performing local search on the electronic device based on the search content, and therefore may also be referred to as a local search result. A local search result having a high degree of matching with the search content may be referred to as a recommended search result. An interface element of the recommended search result corresponds to the first interface element. A local search result not having a high degree of matching with the search content corresponds to a second interface element. The local search result may include an application search result and an application data search result. For same search content, a matching degree of an application search result is higher than that of an application data search result. To be specific, the first interface element may include an interface element of the application search result, or the first interface element may include an interface element of the application search result and an interface element of the application data search result; and the second interface element includes an interface element of the application data search result.

In the foregoing method, on the second interface displayed by the electronic device, the display location of the recommended search result area is at the bottom of the second interface, and the display location of the recommended search result area being at the bottom of the second interface conforms to a one-hand operation habit of a user. In this way, a process of using a search interface by the user can be simplified, to enable the user to operate the electronic device with one hand, and improve user experience.

Optionally, the bottom of the second interface includes any location in an area in which the user can perform an operation with one hand, such as a bottommost part of the second interface, a lower-middle location, or an upper-middle location in a preset range, for example, a lower 3/4 part or a lower 4/5 part of a display. For example, the user enters the search content through a keyboard control, and a display location of the keyboard control is usually in the area in which the user can perform an operation with one hand. In this case, the electronic device may display the keyboard control on the second interface, and display the recommended search result area in an area in which the keyboard control is located and/or in a preset range near the area in which the keyboard control is located.

In a possible design of the first aspect, the method further includes: In response to a first slide operation on the first interface element, the electronic device changes the first interface element with a change in a real-time touch location of the first slide operation. Then the electronic device displays a third interface in response to ending of the first slide operation. The third interface includes a recommended search result area. The recommended search result area included in the third interface includes at least one interface element, not displayed on the second interface, of the application search result or the application data search result.

In this design, in response to the first slide operation, the electronic device may display more first interface elements, that is, the interface element of the application search result or the interface element of the application data search result, in the recommended search result area than those on the second interface. In this way, a quantity of recommended search results displayed on the electronic device can be increased.

In another possible design of the first aspect, in the recommended search result area, a first interface element at a preset arrangement location is in a first display state, and another first interface element is in a second display state. The second interface further includes a first keyboard control, where the first keyboard control includes a first function key. The method further includes: In response to a second operation on the first function key, the electronic device opens a search result corresponding to the first interface element in the first display state.

In this design, the electronic device can conveniently open the search result based on the second operation on the first function key.

In still another possible design of the first aspect, the method further includes: In response to a touch-and-hold and slide operation on the first function key, the electronic device slides the first interface element toward a sliding direction of the touch-and-hold and slide operation, and sets the first interface element at the preset arrangement location in the recommended search result area to the first display state. In response to ending of the touch-and-hold and slide operation, the electronic device opens a search result corresponding to the first interface element in the first display state.

In this design, the electronic device opens the search result in response to the touch-and-hold and slide operation. In this way, the user can open the search result more conveniently through a one-hand operation. This can further help the user operate the electronic device with one hand, and can improve user experience.

In yet another possible design of the first aspect, the first display state includes a highlighted state or a selection box covering state.

In still yet another possible design of the first aspect, the second interface further includes a local search result area and a search box. A display location of the local search result area is above the display location of the recommended search result area, a display location of the search box is below the display location of the recommended search result area, and a display location of the first keyboard control is below the search box. The local search result area includes a second interface element, and the second interface element includes the interface element of the application data search result.

In a further possible design of the first aspect, before the electronic device displays the first interface, the method further includes: The electronic device displays a desktop, where the desktop includes a search button and a status bar. That the electronic device displays a first interface includes: The electronic device displays the first interface in response to a tap operation on the search button; and/or the electronic device displays the first interface in response to a pull-down operation triggered in an area on the desktop other than the status bar.

In this design, the electronic device can quickly enter the first interface through the desktop.

In a still further possible design of the first aspect, before the displaying a first interface, the method further includes:

The electronic device displays a leftmost home screen, where the leftmost home screen includes a leftmost home screen search box. That the electronic device displays a first interface includes: The electronic device displays the first interface in response to a tap operation on the leftmost home screen search box.

In this design, the electronic device can quickly enter the first interface through the leftmost home screen search box.

In a yet further possible design of the first aspect, the interface element includes an icon and/or a text description.

In a still yet further possible design of the first aspect, the first operation includes any one of a tap operation, a double-tap operation, or a touch-and-hold operation.

In even yet another possible design of the first aspect, the second operation includes a tap operation or a double-tap operation.

According to a second aspect, this application further provides an interface display method, applied to an electronic device. The method includes: The electronic device displays a fourth interface. Then the electronic device displays a fifth interface in response to a search operation on the fourth interface. The search operation includes entering search content, the fifth interface is an interface for displaying a search result obtained based on the search content, and the search result includes an application search result and an application data search result. The fifth interface includes a recommended search result area, a local search result area, and a second keyboard control. The recommended search result area includes a third interface element. The local search result area includes a fourth interface element. The third interface element includes an interface element of the application search result, or an interface element of the application search result and an interface element of the application data search result. The fourth interface element includes an interface element of the application data search result. The second keyboard control includes a second function key. Then the electronic device displays a sixth interface in response to a third operation on the second function key. The sixth interface includes the recommended search result area, the local search result area, and a third keyboard control. The third keyboard control includes a search pop-up window or a grid layout. The search pop-up window includes a first touch area. The grid layout includes a first touch area and a second touch area. The first touch area has a correspondence with the third interface element. The second touch area has a correspondence with the fourth interface element. Then, in response to a tap operation on the first touch area, the electronic device opens a search result corresponding to the third interface element. It should be understood that, when the electronic device displays the grid layout, in response to a tap operation on the second touch area, the electronic device opens a search result corresponding to the fourth interface element.

In this design, the electronic device displays the keyboard control including the grid layout or the search pop-up window. In this way, in response to the tap operation on the first touch area, the electronic device can open the search result corresponding to the third interface element. It can be understood that a display location of the keyboard control conforms to a one-hand operation habit of a user. Therefore, the user may open, based on a one-hand operation through the grid layout or the search pop-up window included in the keyboard control, the search result corresponding to the third interface element. That is, the electronic device displays the keyboard control including the grid layout or the search pop-up window, to simplify a process of using a search interface by the user, enable the user to operate the electronic device with one hand, and improve user experience.

In another possible design of the second aspect, the third keyboard control includes the search pop-up window and a third function key. In the search pop-up window, a third interface element corresponding to the first touch area is displayed at a location corresponding to the first touch area. A third interface element at a preset arrangement location in the search pop-up window is in a third display state, and a third interface element at another location in the search pop-up window is in a fourth display state. The method further includes: In response to a tap operation on the third function key, the electronic device opens the third interface element in the third display state.

In this design, the third keyboard control including the third function key is displayed. In this way, the user can open the search result conveniently through a one-hand operation. This can further help the user operate the electronic device with one hand, and can improve user experience.

In another possible design of the second aspect, the method further includes: In response to a touch-and-hold and slide operation on the third function key, the electronic device slides the third interface element displayed in the search pop-up window toward a sliding direction of the touch-and-hold and slide operation, and sets the third interface element at the preset arrangement location in the search pop-up window to the third display state. Then, in response to ending of the touch-and-hold and slide operation, the electronic device opens the third interface element in the third display state.

In this design, the electronic device opens the search result in response to the touch-and-hold and slide operation. In this way, the user can open the search result more conveniently through a one-hand operation. This can further help the user operate the electronic device with one hand, and can improve user experience.

In still another possible design of the second aspect, the third display state includes a highlighted state or a selection box covering state.

In yet another possible design of the second aspect, the third keyboard control includes the grid layout. In the grid layout, a third interface element corresponding to the first touch area is displayed at a location corresponding to the first touch area. In the grid layout, a fourth interface element corresponding to the second touch area is displayed at a location corresponding to the second touch area.

In this design, the electronic device displays the third interface element at the location corresponding to the first touch area, and displays, at the location corresponding to the second touch area, the fourth interface element corresponding to the second touch area. This can enable the user to intuitively sense a correspondence between a touch area and an interface element, to improve user experience.

In still yet another possible design of the second aspect, the third keyboard control includes the grid layout, and the third interface element includes an icon. In the grid layout, an outline of an icon corresponding to the first touch area is displayed at a location corresponding to the first touch area.

In this design, the electronic device displays, at the location corresponding to the first touch area, the outline of the icon corresponding to the first touch area, to reduce resource consumption when the electronic device displays the grid layout.

In a further possible design of the second aspect, a display location of the third keyboard control is at the bottom of the sixth interface.

In a still further possible design of the second aspect, before the electronic device displays the fourth interface, the method further includes: The electronic device displays a desktop, where the desktop includes a search button and a status bar. That the electronic device displays a fourth interface includes: The electronic device displays the fourth interface in response to a tap operation on the search button; and/or, the electronic device displays the fourth interface in response to a pull-down operation triggered in an area on the desktop other than the status bar.

In this design, the electronic device can quickly enter the first interface through the desktop.

In a yet further possible design of the second aspect, before the displaying a fourth interface, the method further includes: The electronic device displays a leftmost home screen, where the leftmost home screen includes a leftmost home screen search box. The displaying a fourth interface includes: The electronic device displays the fourth interface in response to a tap operation on the leftmost home screen search box.

In this design, the electronic device can quickly enter the first interface through the leftmost home screen search box.

According to a third aspect, this application provides an electronic device. The electronic device includes a memory, one or more processors, and a Bluetooth module. The memory is coupled to the processor. The memory stores computer program code, and the computer program code includes computer instructions. When the computer instructions are executed by the processor, the electronic device is enabled to perform the method provided in any one of the first aspect and the possible designs of the first aspect, or the electronic device is enabled to perform the method provided in any one of the second aspect and the possible designs of the second aspect.

According to a fourth aspect, this application provides a computer-readable storage medium. The computer-readable storage medium stores instructions, and when the computer instructions are run on an electronic device, the electronic device is enabled to perform the method provided in any one of the first aspect and the possible designs of the first aspect, or the electronic device is enabled to perform the method provided in any one of the second aspect and the possible designs of the second aspect.

According to a fifth aspect, this application provides a computer program product including instructions. When the computer program product is run on an electronic device, the electronic device is enabled to perform the method provided in any one of the first aspect and the possible designs of the first aspect, or the electronic device is enabled to perform the method provided in any one of the second aspect and the possible designs of the second aspect.

For technical effects of any one of the designs in the third aspect to the fifth aspect, refer to the technical effects of different designs in the first aspect. Details are not described herein again.

### BRIEF DESCRIPTION OF DRAWINGS

FIG. 1 is a diagram of a scenario according to an embodiment of this application;
FIG. 2 is a diagram of a process of using an electronic device according to an embodiment of this application;
FIG. 3 is a diagram of a hardware structure of an electronic device according to an embodiment of this application;
FIG. 4 is a diagram of a software architecture of an electronic device according to an embodiment of this application;
FIG. 5 is a schematic flowchart of an interface display method according to an embodiment of this application;
FIG. 6 is another schematic flowchart of an interface display method according to an embodiment of this application;
FIG. 7A, FIG. 7B, FIG. 7C, and FIG. 7D are a diagram of a group of graphical user interfaces according to an embodiment of this application;
FIG. 8 is still another schematic flowchart of an interface display method according to the other an embodiment of this application;
FIG. 9 is a diagram of another group of graphical user interfaces according to an embodiment of this application;
FIG. 10A, FIG. 10B, FIG. 10C, and FIG. 10D are a diagram of still another group of graphical user interfaces according to an embodiment of this application;
FIG. 11A, FIG. 11B, FIG. 11C, FIG. 11D, FIG. 11E, and FIG. 11F are a diagram of yet another group of graphical user interfaces according to an embodiment of this application;
FIG. 12A, FIG. 12B, FIG. 12C, FIG. 12D, FIG. 12E, and FIG. 12F are a diagram of a further group of graphical user interfaces according to an embodiment of this application;
FIG. 13 is a diagram of a still further group of graphical user interfaces according to an embodiment of this application;
FIG. 14A, FIG. 14B, FIG. 14C, and FIG. 14D are a diagram of a yet further group of graphical user interfaces according to an embodiment of this application;
FIG. 15 is a diagram of a still yet further group of graphical user interfaces according to an embodiment of this application;
FIG. 16 is a diagram of a structure of another electronic device according to an embodiment of this application; and
FIG. 17 is a diagram of a structure of a chip system according to an embodiment of this application.

### DESCRIPTION OF EMBODIMENTS

The following describes technical solutions in embodiments of this application with reference to accompanying drawings in embodiments of this application. In descriptions of this application, unless otherwise specified, "/" indicates an "or" relationship between associated objects. For example, A/B may indicate A or B. In this application, "and/or" describes only an association relationship between associated objects and indicates that three relationships may exist. For example, A and/or B may indicate the following three cases: Only A exists, both A and B exist, and only B exists, where A and B may be in a singular or plural form. In addition, in descriptions of embodiments of this application, unless otherwise specified, "a plurality of" means two or more. "At least one of the following items (pieces)" or a similar expression thereof indicates any combination of the items, including one of the items (pieces) or any combination of a plurality of the items (pieces). For example, at least one of a, b, or c may indicate a, b, c, a and b, a and c, b and c, or a, b, and c, where a, b, and c may be in a singular or plural form. In addition, for ease of clearly describing the technical solutions in embodiments of this application, the terms "first", "second", and the like are used in embodiments of this application to distinguish between same or similar items having basically the same functions and effects. A person skilled in the art can understand that the terms "first", "second", and the like do not limit a quantity or an execution order, and the terms "first", "second", and the like do not necessarily indicate a specific difference.

In addition, in embodiments of this application, the term "example", "for example", or the like is used to give an example, an illustration, or a description. Any embodiment or design scheme described by using "example" or "for example" in embodiments of this application should not be construed as being more preferred or advantageous than another embodiment or design scheme. To be precise, the term "example", "for example", or the like is intended to present a related concept in a specific manner, to facilitate understanding.

In the technical solutions disclosed in this application, processing such as collection, storage, use, processing, transmission, provision, and disclosure of personal information of a user is in compliance with provisions of related laws and regulations, and does not violate public order or good customs.

With development of terminal technologies, electronic devices have become a part of people's work and life, and there is an increasing quantity of applications on the electronic devices. People may use the applications on the electronic devices to meet daily work and life requirements. In addition, as people use electronic devices more frequently, people also frequently operate electronic devices with one hand.

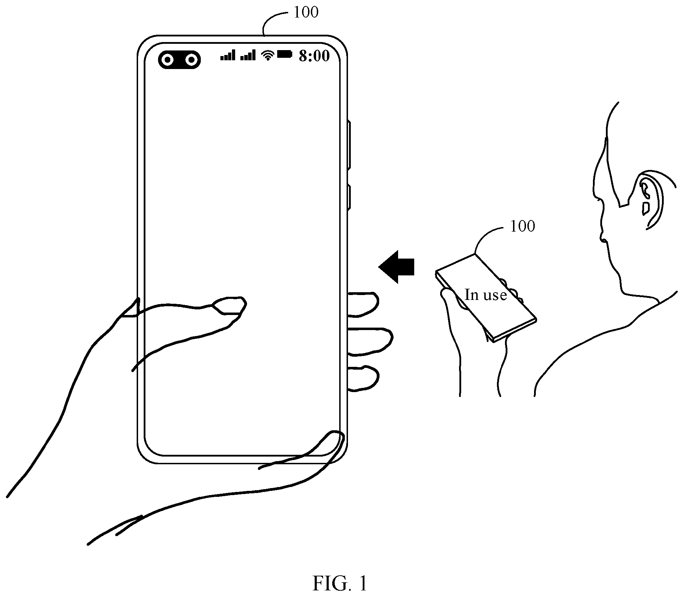

For example, as shown in FIG. 1, the technical solutions provided in embodiments of this application may be applied to daily use of an electronic device 100 by a user, and are especially applicable to a process in which the user operates the electronic device 100 with one hand. For example, the user holds the electronic device with the right hand and operates the electronic device with the thumb of the right hand. For another example, the user holds the electronic device with the left hand and operates the electronic device with the left thumb. In the following embodiments of this application, the technical solutions provided in embodiments of this application are described by using an example in which the user holds the electronic device with the left hand and operates the electronic device with the left thumb.

In a process in which the user uses the electronic device, because there are many applications on the electronic device, it takes time for the user to open an application by tapping an application icon on a desktop or in an application menu. In addition, because there are many applications, there is also a large amount of application data, and it takes time to open the application data in a conventional manner. Therefore, the user may search for, select, and open an application by using a search interface of the electronic device. Alternatively, the user may search for, select, and open application data, for example, SMS messages, contacts, or pictures, that the user wants to open, by using a search interface of the electronic device. This can reduce time for the user to open an application and application data.

The electronic device 100 may also be referred to as a terminal (terminal), a terminal device, user equipment (user equipment, UE), a mobile station (mobile station, MS), a mobile terminal (mobile terminal, MT), or the like. The electronic device 100 may be an electronic device with a display, for example, a mobile phone, a tablet computer, a wearable device, a smart screen, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA); or may be a vehicle-mounted device with a display, for example, a vehicle-mounted computer; or may be an internet of things device with a display, for example, some smartwatches or smartbands. A product form of the electronic device is not limited in embodiments of this application.

In some solutions, the user may perform search on the electronic device to obtain a search result. However, it is quite difficult for the user to select or open the search result through a one-hand operation. In some scenarios, the user even needs to open the search result through a two-hand operation. Consequently, operations of the user are complex, and user experience is poor.

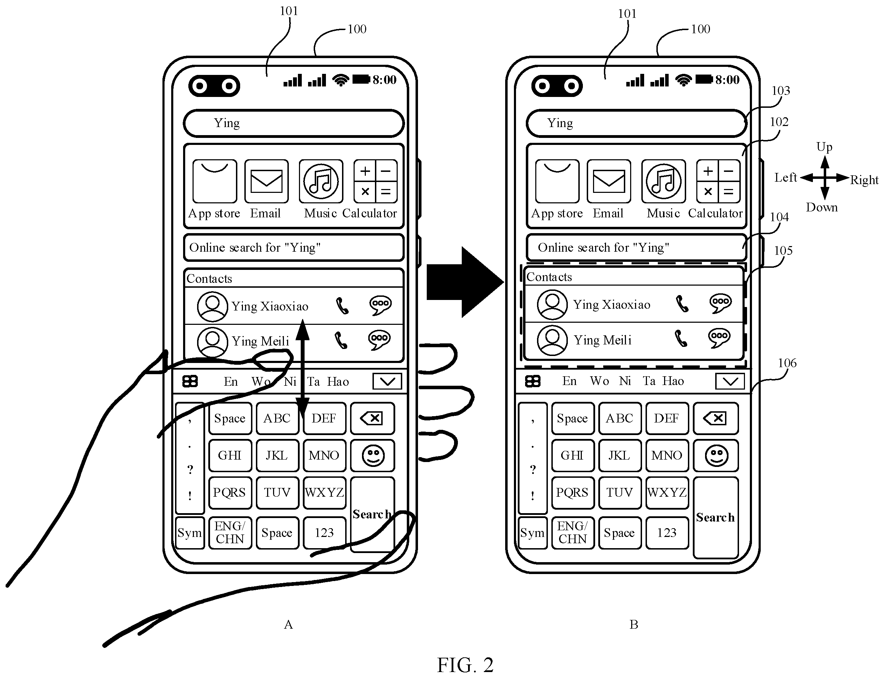

For example, refer to a part A of FIG. 2. The user holds the electronic device 100 with the left hand, the electronic device 100 displays a search interface 101, and the user may move up and down with the thumb of the left hand to tap a screen to operate the electronic device 100.

Specifically, refer to a part B of FIG. 2. It is assumed that the user enters search content, for example, "Ying", in a search box 103 through a keyboard 106 of the electronic device 100. The electronic device 100 sequentially displays a recommended search result 102, an online search option 104, and a local search result 105 below the search box 103 in a top-to-bottom order based on the search content entered by the user.

The local search result 105 may be understood as a search result that is obtained by the electronic device by performing local search on the electronic device based on the search content and that matches the search content. The search result includes an application, or an application and application data. The recommended search result 102 may be understood as N search results with a high recommendation degree in the local search result, where N is a positive integer. The recommendation degree is positively correlated with a matching degree, and the matching degree is a degree of matching between the search result and the search content.

For example, for up, down, left, and right of the electronic device (shown as a mobile phone in FIG. 2), refer to a coordinate system shown in FIG. 2. In the following embodiments of this application, the technical solutions provided in embodiments of this application are described by using the coordinate system shown in FIG. 2 as an example.

It can be understood that, usually, the user may easily perform an operation at the bottom, for example, a lower 3/4 part or a lower 4/5 part, of a display through a one-hand operation. For another part, for example, an upper 1/4 part or an upper 1/5 part of the display, it is difficult for the user to perform an operation on this part of the display with one hand. In the foregoing solution, the recommended search result 102 is displayed at the top of the electronic device, for example, displayed at the upper 1/5 part of the display. In this case, when the user holds the electronic device 100 with the left hand, it is quite difficult to select and open the recommended search result 102 displayed at the top of the electronic device with a finger of the left hand. Especially, in some scenarios in which the electronic device 100 has a large size or the user has a small hand, it is more difficult for the user to select and open the recommended search result 102 displayed at the top of the desktop by performing a one-hand operation with the thumb of the left hand. The user can select and open the recommended search result 102 only through a two-hand operation. For example, the user can select and open the recommended search result 102 only by tapping the recommended search result 102 with the right hand. Consequently, operations of the user are complex, and user experience is degraded.

In view of this, embodiments of this application provide an interface display method. In the method, an interface element corresponding to a recommended search result is displayed at the bottom (for example, a lower 1/2 part, a lower 2/3 part, a lower 3/4 part, or a lower 4/5 part) of a display, so that a user can select and open the recommended search result, for example, an application, through a one-hand operation. This can enable the user to operate an electronic device with one hand more conveniently, to improve user experience.

It can be understood that the bottom of the display includes any location in an area in which the user can perform an operation with one hand, such as a bottommost part of the display, a lower-middle location, or an upper-middle location in a preset range, for example, a lower 3/4 part or a lower 4/5 part of the display. For example, the user enters search content through a keyboard control, and a display location of the keyboard control is usually in the area in which the user can perform an operation with one hand. Then the electronic device may display the keyboard control on the display, and display the interface element corresponding to the recommended search result in an area in which the keyboard control is located and/or in a preset range near the area in which the keyboard control is located.

A hardware structure and a software architecture of the electronic device 100 are briefly described below.

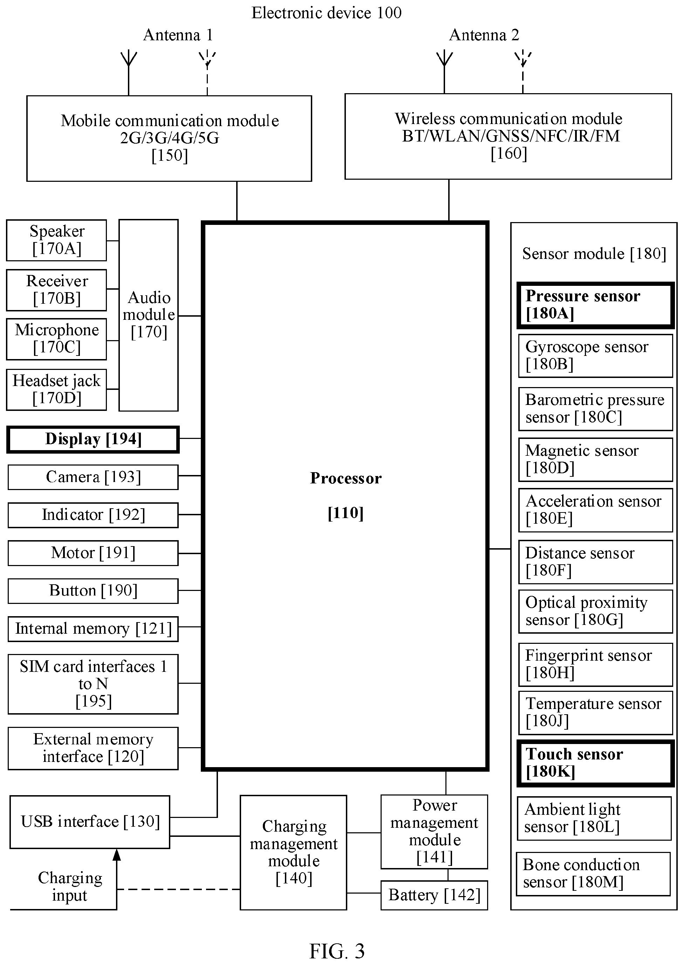

For example, as shown in FIG. 3, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be separate components, or may be integrated into one or more processors.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronous serial bus, and includes a serial data line (serial data line, SDA) and a serial clock line (derail clock line, SCL). In some embodiments, the processor 110 may include a plurality of groups of I2C buses. The processor 110 may be separately coupled to the touch sensor 180K, a charger, a flash light, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used for audio communication, and sampling, quantization, and encoding of an analog signal. In some embodiments, the audio module 170 may be coupled to the wireless communication module 160 through the PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus used for asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement an image shooting function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface conforming to a USB standard specification, and may be specifically a mini USB interface, a micro USB interface, a USB Type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may alternatively be configured to connect to another electronic device, for example, an AR device.

It can be understood that an interface connection relationship between the modules in this embodiment of this application is merely an example for description, and does not constitute a limitation on the structure of the electronic device 100. In some other embodiments of this application, the electronic device 100 may alternatively use an interface connection mode different from that in the foregoing embodiment, or use a combination of a plurality of interface connection modes.

The electronic device 100 implements a display function through the GPU, the display 194, the application processor, and the like. The GPU is a microprocessor for image processing, and is connected to the display 194 and the application processor. The GPU is configured to perform mathematical and geometric computation for graphics rendering. The processor 110 may include one or more GPUs that execute program instructions to generate or change displayed information.

The display 194 is configured to display an image, a video, or the like. The display 194 includes a display panel. The display panel may be a liquid crystal display (liquid crystal display, LCD), an organic light-emitting diode (organic light-emitting diode, OLED), or the like. In some embodiments, the electronic device 100 may include one or N displays 194, where N is a positive integer greater than 1.

The pressure sensor 180A is configured to sense a pressure signal, and may convert the pressure signal into an electrical signal. In some embodiments, the pressure sensor 180A may be disposed in the display 194. There are many types of pressure sensors 180A, for example, a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines intensity of pressure based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A.

The touch sensor 180K is also referred to as a "touch panel". The touch sensor 180K may be disposed in the display 194. The touch sensor 180K and the display 194 constitute a touchscreen, which is also referred to as a "touch screen". The touch sensor 180K is configured to detect a touch operation performed on or near the touch sensor. The touch sensor may transmit the detected touch operation to the application processor to determine a type of a touch event. The display 194 may provide a visual output related to the touch operation. In some other embodiments, the touch sensor 180K may alternatively be disposed on a surface of the electronic device 100 at a location different from a location of the display 194.

In some embodiments, when the terminal device is a device with a touch function, the display 194 may be combined with a touchscreen. A user triggering a corresponding location on the display 194 is equivalent to the user triggering a corresponding location on the touchscreen.

The triggering may include a tap operation, a touch-and-hold operation, and the like. The tap operation may be an operation of pressing a corresponding location on the display 194 and lifting a finger within a preset time threshold. The touch-and-hold operation may be understood as an operation of pressing a corresponding location on the display 194 and keeping pressing the location for more than a preset time threshold. The time threshold may be 1.5 seconds, 2 seconds, or the like. It can be understood that both the tap operation and the touch-and-hold operation described in this embodiment of this application may be applied to the terminal device in which the display 194 is combined with the touchscreen. Details are not described below again.

In some other embodiments, the display 194 may alternatively not be combined with a touchscreen. In this case, both the tap operation and the touch-and-hold operation in this embodiment of this application may be replaced with other operations or the like. This is not limited in this embodiment of this application.

In some embodiments, touch operations that are performed at a same touch location but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating a new SMS message is executed.

A software system of the electronic device 100 may use a hierarchical architecture, an event-driven architecture, a microkernel architecture, a microservice architecture, or a cloud architecture. In embodiments of this application, an Android^{™} system with a hierarchical architecture is used as an example to describe a software structure of the electronic device 100.

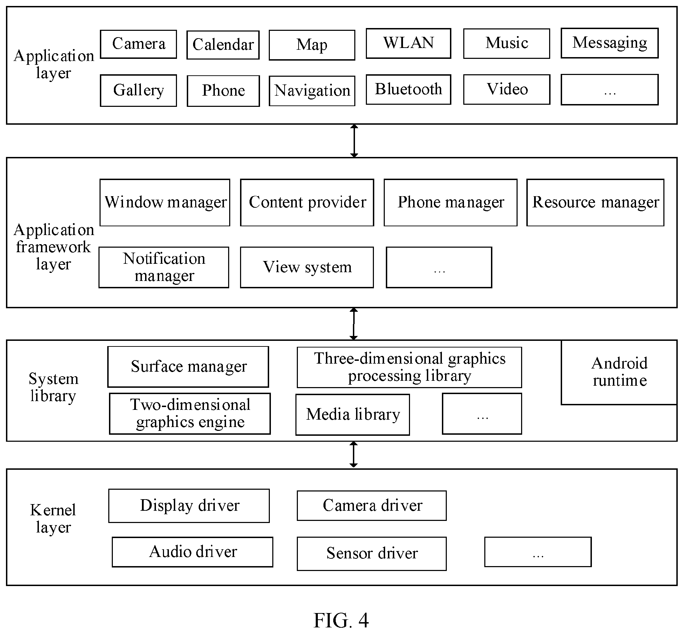

FIG. 4 is a block diagram of a software architecture of an electronic device 100 according to an embodiment of this application.

In a hierarchical architecture, software is divided into several layers, and each layer has a clear role and task. The layers communicate with each other through a software interface. In some embodiments, the Android^{™} system is divided into four layers from top to bottom: an application layer, an application framework layer, an Android^{™} runtime (Android^{™} runtime) and system library, and a kernel layer.

The application layer may include a series of application packages.

As shown in FIG. 4, the application packages may include applications such as Camera, Gallery, Calendar, Calls, Map, Navigation, WLAN, Bluetooth, Music, Videos, and Messages.

The application framework layer provides an application programming interface (application programming interface, API) and a programming framework for the applications at the application layer. The application framework layer includes some predefined functions.

As shown in FIG. 4, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, or the like.

The content provider is configured to store and obtain data, and enable the data to be accessed by an application. The data may include a video, an image, audio, calls that are made and answered, a browsing history, a bookmark, an address book, and the like.

The view system includes visual controls, such as a control for displaying text and a control for displaying a picture. The view system may be configured to construct an application. A display interface may include one or more views. For example, a display interface including an SMS message notification icon may include a text display view and a picture display view.

The phone manager is configured to provide a communication function for the electronic device 100, for example, call status management (including answering, hanging up, or the like).

The resource manager provides various resources such as a localized character string, an icon, a picture, a layout file, and a video file for an application.

The notification manager enables an application to display notification information in a status bar, and may be configured to convey a notification message. The message may automatically disappear after a short stay without user interaction. For example, the notification manager is configured to indicate download completion or provide a message notification. The notification manager may alternatively be a notification that appears in a top status bar of the system in a form of a graph or scroll bar text, for example, a notification for an application running in the background, or may be a notification that appears on a screen in a form of a dialog window. For example, text information is displayed in the status bar, an alert tone is played, the electronic device vibrates, or an indicator blinks.

The Android^{™} runtime includes a core library and a virtual machine. The Android^{™} runtime is responsible for scheduling and managing the Android^{™} system.

The core library includes two parts: a utility function that needs to be invoked in Java language and a core library of Android^{™}.

The application layer and the application framework layer run in the virtual machine. The virtual machine executes Java files at the application layer and the application framework layer as binary files. The virtual machine is configured to perform functions of object lifecycle management, stack management, thread management, security and exception management, garbage collection, and the like.

The system library may include a plurality of functional modules, for example, a surface manager (surface manager), a media library (media libraries), a three-dimensional graphics processing library (for example, OpenGL ES), and a 2D graphics engine (for example, SGL).

The surface manager is configured to manage a display subsystem, and provide fusion of 2D and 3D layers for a plurality of applications.

The media library supports playback and recording in a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The two-dimensional (2D) graphics engine is a drawing engine for 2D drawing.

The kernel layer is a layer between hardware and software. The kernel layer includes at least a display driver, a camera driver, an audio driver, and a sensor driver.

For example, in the foregoing interface display method, the electronic device may draw, through the two-dimensional graphics engine or the three-dimensional graphics engine, an interface element corresponding to a recommended search result; and then display the interface element at the bottom of the display of the electronic device through the view system and the display driver.

In the following embodiments of this application, the technical solutions provided in embodiments of this application are described by using an example in which the electronic device is a mobile phone. It should be understood that, during actual use, the electronic device may alternatively have other product forms, such as a tablet computer and a smartwatch. This may be specifically designed according to an actual use requirement.

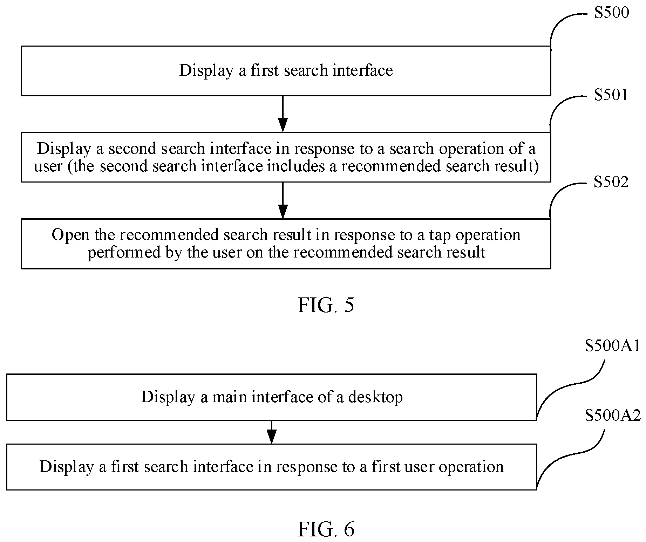

For example, as shown in FIG. 5, the interface display method may include steps S500 to S502.

S500: The mobile phone displays a first search interface.

The first search interface may also be referred to as a search activation page, an initial search page, or the like. A user can use the mobile phone more conveniently by using the search interface. For example, the user may enter, on the search interface, a name of an application that the user wants to start, to open the application. For another example, the user may enter, on the search interface, a name of a contact that the user wants to call, to make a call to the contact. In some embodiments, the first search interface may also be referred to as a first interface or a fourth interface.

In a possible implementation, as shown in FIG. 6, step S500 may include steps S500A1 and S500A2.

S500A1: The mobile phone displays a main interface of a desktop.

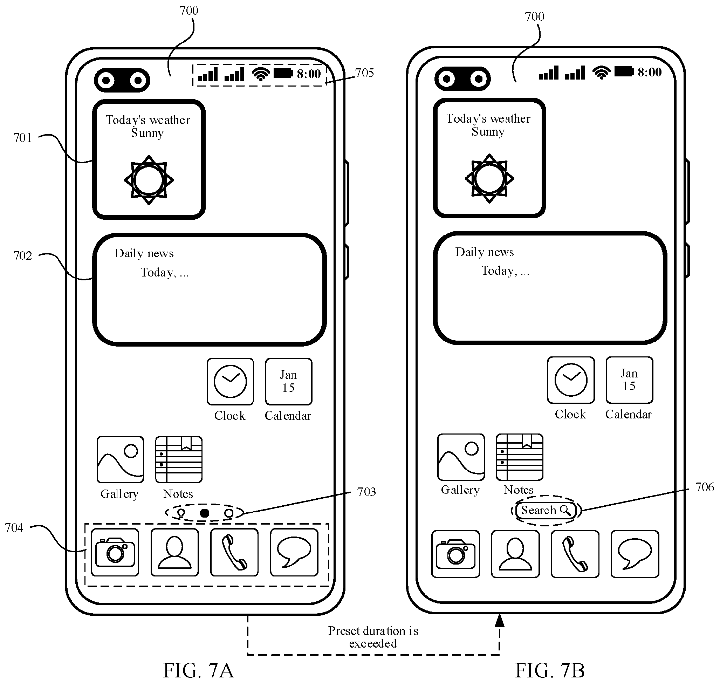

When the mobile phone opens the desktop, the mobile phone may display the main interface of the desktop by default. As shown in FIG. 7A, the mobile phone displays the main interface 700 of the desktop. The main interface 700 of the desktop may include a weather card 701, a news card 702, and icons of a plurality of applications, for example, an icon of a Clock application, an icon of a Calendar application, an icon of a Gallery application, and an icon of a Memo application. In addition, a block (block) bar 704 of the interface may include icons of a plurality of applications, for example, an icon of a Camera application, an icon of a Contacts application, an icon of a Phone application, and an icon of a Messages application. The interface further includes a status bar 705, and some signs for indicating a status of the mobile phone, for example, an icon related to a battery level of the mobile phone, an icon related to current signal strength of the mobile phone, and current time, may be displayed in the status bar. The interface further includes a navigation point 703.

The navigation point 703 may indicate a current interface. The navigation point 703 may include one or more points, and each point may indicate an interface of a desktop of the mobile phone. As shown in FIG. 7A, the navigation point 703 may include three points, and any one of the three points may be indicate an interface that may be displayed on the desktop of the terminal device.

It should be understood that, during actual use, the navigation point may alternatively include more points, which may specifically correspond to a quantity of points on the desktop of the mobile phone. In this embodiment of this application, an example in which the navigation point includes three points is used for description. A leftmost point corresponds to a leftmost home screen of the mobile phone, a middle point corresponds to the main interface of the desktop of the mobile phone, and a rightmost point corresponds to another interface of the desktop of the mobile phone.

In a possible implementation, as shown in FIG. 7B, the navigation point 703 in the part A may alternatively not be displayed on the main interface of the mobile phone, and a search button 706 is displayed in an area corresponding to the navigation point 703. The search button 706 may be configured to trigger the mobile phone to display the first search interface. For a triggering mode of the search button 706, refer to the following descriptions. Details are not described herein.

In another possible implementation, as shown in FIG. 7B, if duration within which the mobile phone displays the main interface of the desktop exceeds preset duration, the mobile phone may display a search button 706 in an area corresponding to the navigation point 703. The preset duration may be any duration, for example, 0.5 second or 1 second.

In still another possible implementation, the mobile phone may alternatively display both a search button and a navigation point. For example, the search button is displayed above or below the navigation point. Specifically, display modes and display locations of the search button and the navigation point may be set according to an actual use requirement. This is not limited in embodiments of this application.

In the following embodiments of this application, embodiments of this application are described by using an example in which the main interface of the desktop is the main interface 700 of the desktop shown in FIG. 7B. It can be understood that other more or less display content may be displayed on the main interface 700 of the desktop. This may be specifically designed according to an actual use requirement. This is not limited in embodiments of this application.

S500A2: The mobile phone displays the first search interface in response to a first user operation.

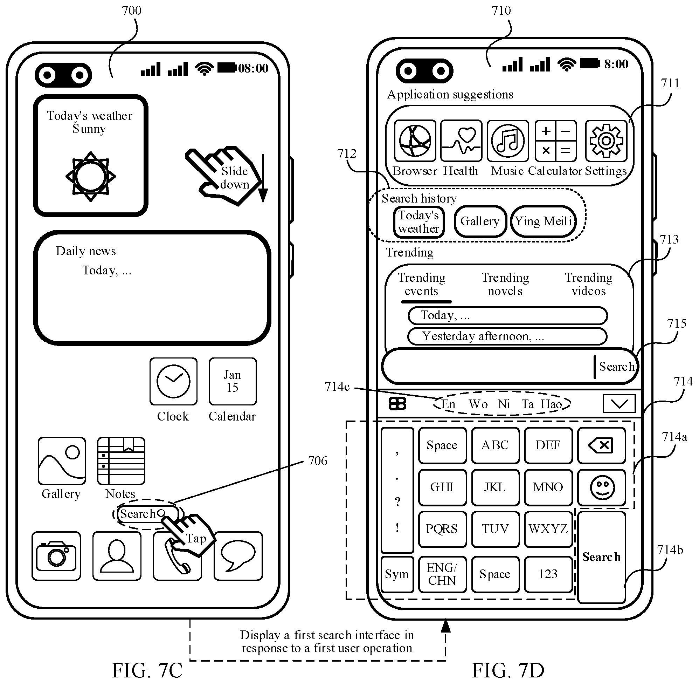

In a possible implementation, the first user operation may include a slide-down operation triggered by the user in an area on the main interface other than the status bar. For example, as shown in FIG. 7C, the user may slide with a finger in a first direction on a display of the mobile phone, to trigger a slide-down operation on the mobile phone. The first direction may be understood as a direction in which the status bar of the mobile phone points to the block bar.

In another possible implementation, the first user operation may alternatively include a tap operation performed by the user on the search button. For example, still as shown in FIG. 7C, the user may tap an area corresponding to the search button 706 on the display, to trigger a tap operation on the search button 706 on the mobile phone.

It can be understood that the first user operation includes but is not limited to the slide-down operation of the user on the main interface and the tap operation on the search button. During actual application, the first user operation may further include other more operations, for example, a voice instruction operation of the user. This may be specifically set according to an actual use requirement. This is not limited in embodiments of this application.

For example, in response to the first user operation, the mobile phone displays the first search interface, which may be shown in FIG. 7D. The first search interface 710 may include, in a top-to-bottom location order, an "Application suggestions" recommendation bar 711, a "Search history" recommendation bar 712, a "Trending" recommendation bar 713, a search box 715, and a keyboard control 714.

It can be understood that, during actual application, the first search interface may alternatively be designed in more other manners. This is not limited in embodiments of this application.

The "Application suggestions" recommendation bar 711 may include a plurality of suggested applications, for example, icons and application names of Browser, Health, Music, Calculator, and Settings. For example, the mobile phone may collect statistics on frequency of using applications on the mobile phone by the user, and display several frequently used applications in the "Application suggestions" recommendation bar 711. In this way, the user can conveniently open, through the "Application suggestions" recommendation bar 711, an application that is frequently used by the user.

The "Search history" recommendation bar 712 may include a plurality of historical search items, such as Today's weather, Gallery, and Ying Meili. For example, in the "Search history" recommendation bar 712, historical search items may be displayed from left to right in reverse chronological order of the historical search items. For another example, in the "Search history" recommendation bar 712, a historical search item that is most frequently entered by the user may be displayed on the leftmost, and then historical search items are displayed, on the right of the historical search item that is most frequently entered by the user, from left to right in reverse chronological order of the historical search items.

The "Trending" recommendation bar 713 may include a plurality of trending options. For example, the "Trending" recommendation bar 713 includes Trending events, Trending novels, and Trending videos. The Trending events corresponds to trending recommendation items such as "Today, ..." and "Yesterday afternoon, ...".

The search box 715 may be used for displaying a search word entered by the user and/or an associated word of the search word. The user may enter the search word through the keyboard control 714. For detailed descriptions of the search box 715 and the keyboard control, refer to the following descriptions. Details are not described herein.

The keyboard control 714 may include an input key 714a for entering input content, a function key 714b for triggering a preset function, and an input selection box 714c for displaying input content.

The input key 714a may include an "ABC" input key, a "TUV" input key, and the like. The input selection box 714c may be used for displaying input content, or may be used for selecting input content, where the selected input content may be displayed in the search box as a search word. The function key 714b may include a "Search" key, and may be used for triggering the mobile phone to perform a search operation on the search word in the search box. The input selection box 714c is used for displaying input content entered through the input key 714a.

For example, in response to a tap operation on the input key 714a, the mobile phone displays, in the input selection box 714c, input content corresponding to the tap operation on the input key 714a. Then, in response to a tap operation on the input content in the input selection box 714c, the mobile phone performs a tap operation on the input content in the input selection box 714c, and the tapped input content is displayed in the search box 715 as a search word. Then the mobile phone searches for the search word in response to a tap operation on the function key 714b.

It should be understood that, during actual use, the keyboard control 714 may have different control forms. For example, the keyboard control may be a 26-key keyboard control or a 13-key keyboard control. For another example, the keyboard control includes more other keys. This may be specifically designed according to an actual use requirement. This is not limited in embodiments of this application. In the following embodiments, the technical solutions provided in embodiments of this application are described by using a 9-key keyboard control as an example.

It should be noted that the search box 715 is located above the keyboard control 714. In this way, the search word entered by the user through the keyboard control 714 can be displayed above the keyboard control 714. If the user wants to copy, cut, or perform another operation on the input search word, the user can conveniently copy, cut, or perform the another operation on the search word through a one-hand operation. This can improve user experience.

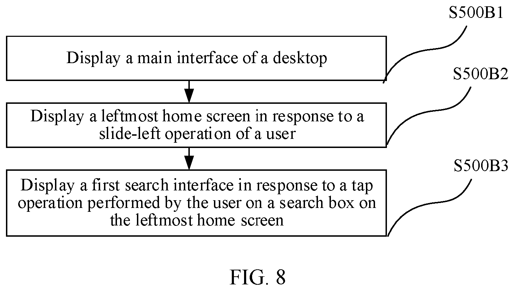

In another possible implementation, as shown in FIG. 8, step S500 may include steps S500B1 to S500B3.

S500B1: The mobile phone displays a main interface of a desktop.

For details, refer to related descriptions of step S500A1. Details are not described herein again.

S500B2: The mobile phone displays a leftmost home screen in response to a slide-left operation of the user. The leftmost home screen includes a search box and a plurality of cards.

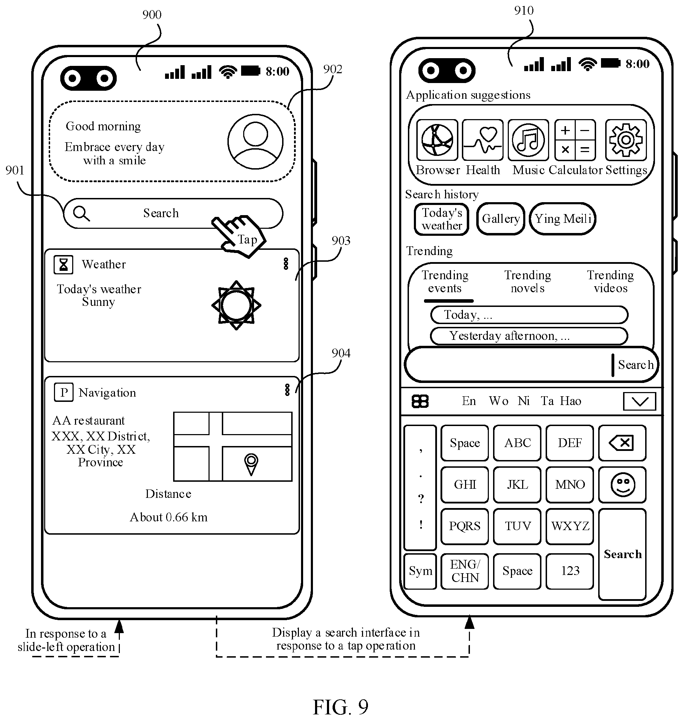

For example, as shown in FIG. 9, the mobile phone displays a leftmost home screen 900 in response to a slide-left operation triggered by the user on the main interface of the desktop. The leftmost home screen of the mobile phone includes a search box and a plurality of cards. For example, the leftmost home screen includes a search box 901, a user card 902, a weather card 903, and a navigation card 904. The user card 902 may include an avatar of the user and some greetings. The weather card 903 may be used for displaying current weather, for example, may include text for describing the weather today and a picture corresponding to the weather today. The navigation card 904 may be used for displaying a destination that the user is currently navigating to.

It can be understood that, during actual application, the user may alternatively trigger, through other more operations, the mobile phone to display the leftmost home screen. This may be specifically set according to an actual use requirement. This is not limited in embodiments of this application.

S500B3: The mobile phone displays the first search interface in response to a tap operation performed by the user on the search box on the leftmost home screen.

For example, as shown in FIG. 9, the mobile phone displays a first search interface 910 in response to a tap operation performed by the user on the search box 901 on the leftmost home screen 900. For related descriptions of the first search interface 910, refer to the descriptions corresponding to FIG. 7A, FIG. 7B, FIG. 7C, and FIG. 7D. Details are not described herein again.

It can be understood that steps of triggering the mobile phone to display the first search interface include but are not limited to the foregoing steps, for example, steps S500A1 and S500A2, and/or steps S500B1 to S500B3. This may be specifically set according to an actual use requirement. A condition for triggering the mobile phone to display a search page is not limited in embodiments of this application.

S501: The mobile phone displays a second search interface in response to a search operation of the user.

The search operation may be understood as that the user enters search content, for example, a search word, in a search box on the first search interface. It can be understood that the user may enter the search word in the search box through a keyboard control on the first search interface, or may enter the search word in the search box through a voice instruction, or may enter the search word through more other operations. This is not limited in embodiments of this application.

In some embodiments, the second search interface may also be referred to as a second interface or a fifth interface.

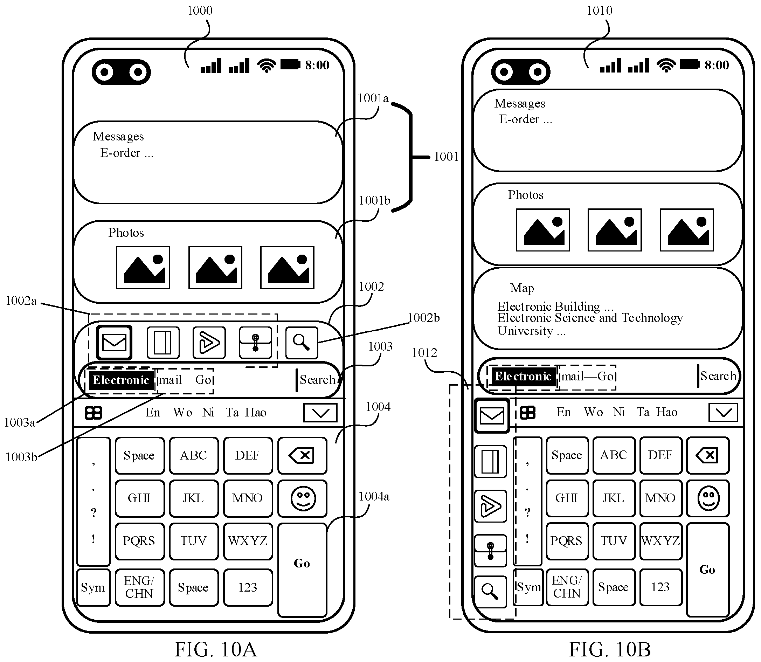

In a possible implementation, as shown in FIG. 10A, the mobile phone displays a second search interface 1000 in response to the user entering a search word "Electronic" on the first search interface. The second search interface includes, in a top-to-bottom order, a local search result area 1001, a recommended search result area 1002, a search box 1003, and a keyboard control 1004.

A local search result is displayed in the local search result area 1001. The local search result may be understood as a full search result obtained by performing local search on the mobile phone based on the search word. The full search result may include an application search result or an application data search result. The application search result may be understood as a search result in which an application name matches the search word, a search result in which an application type matches the search word, or the like. The application data search result may be understood as a search result in which application data matches the search word. The application data may be understood as SMS message content data in a Messages application, photo data (for example, a shooting place of a photo and a name of the photo) in a Photos application, contact data (a name of a contact and a phone number of the contact) in a Contacts application, chat data in an instant messaging application, or the like. The application search result may be referred to as an application program search result.

For example, the local search result includes an SMS message search result 1001a and a photo search result 1001b. It can be understood that, if an SMS message includes the search word, a thumbnail page of the SMS message may be displayed in the SMS message search result 1001a; or if a shooting place of a photo includes the search word, a thumbnail of the photo may be displayed in the photo search result 1001b. It should be noted that the local search result area 1001 may further include more search results, for example, a contact search result, a chat record search result, and a notepad search result. For example, the mobile phone may display more search results in the local search result area 1001 in response to a slide operation triggered in the local search result area 1001. This is not limited in embodiments of this application.

A recommended search result 1002a and an online search option 1002b are displayed in the recommended search result area 1002. The recommended search result 1002a may be understood as a recommendation result that is generated by the mobile phone based on the search word and a habit of using the mobile phone by the user. The habit of using the mobile phone by the user may include frequency of using an application on the mobile phone by the user, duration of use, popularity of the application, and the like.

For example, the recommended search result may include the first N search results with a high recommendation degree in the full search result, where N is a positive integer.

The recommendation degree is positively correlated with a matching degree, and the matching degree is a degree of matching between the full search result and the search word. For example, if the search word matches the application name in the full search result, the recommendation degree is the highest; or if the search word matches the application type in the full search result, the recommendation degree is lower. Alternatively, the recommendation degree may be a preset value. For example, a recommendation degree of the application search result is higher than that of the application data search result.

For example, the search word is "video". Because an application name of an AA video matches "video", a recommendation degree of the AA video is the highest. Because an application type of a player matches the search word, a recommendation degree of the player is lower.

For another example, the recommended search result may include a recommendation result obtained by the mobile phone based on a recommendation algorithm and the search word.

The recommendation algorithm may generate a recommendation result based on the frequency of using the application on the mobile phone by the user, the duration of use, and the popularity of the application. It should be noted that the recommendation result may be a local application already installed on the mobile phone, or may be an application not installed on the mobile phone, or may be application data of a local application, or the like. For example, if the user frequently uses an application, the application or application data of the application may be the recommendation result; or if the user uses an application for long duration, the application or application data of the application may be the recommendation result; or if an application is popular, the application or application data of the application may be the recommendation result.

In some embodiments, the recommended search result may include the first N search results with a high recommendation degree in the application search result. The local search result may include an application data search result. To be specific, in some embodiments, the recommended search result and the local search result may be distinguished depending on whether the search result is an application or application data.

In some embodiments, the recommended search result may be displayed in a horizontal arrangement, and the local search result may be displayed in a vertical arrangement. The being displayed in a horizontal arrangement may be understood as being displayed in an arrangement from a long side of the mobile phone to the other long side. The being displayed in a vertical arrangement display may be understood as being displayed in an arrangement from a short side of the mobile phone to the other short side.

In the following embodiments of this application, the technical solutions provided in embodiments of this application are described by using an example in which the recommended search result includes an application search result, or the recommended search result includes an application search result and an application data search result, and the local search result includes an application data search result. It should be understood that, during actual use, the recommended search result may alternatively include more other search results, and similarly, the local search result may alternatively include more other search results. This may be specifically designed according to an actual use requirement. This is not limited in embodiments of this application.

The online search option 1002b may be understood as an option for triggering searching for the search word in a search engine. To be specific, if the user taps the search option 1002b, the mobile phone jumps to a browser interface and searches for the search word on a web page of the search engine.

A sum of quantities of recommended search results 1002a and online search options 1002b may be a preset quantity. For example, the sum of quantities is 5, 6, or 4. The sum of quantities shown in FIG. 10A is 5.

For example, the recommended search result is arranged horizontally, a recommended search result with a high recommendation degree is arranged on the left, and a recommended search result with a low recommendation degree is arranged on the right. The recommendation degree of the recommended search result is positively correlated to the frequency of use, the duration of use, and the popularity.

For example, still as shown in FIG. 10A, the recommended search result 1002a includes: an Email application search result, an E-book application search result, a Video application search result, and a File manager application search result.

For the recommended search result 1002a and the online search result 1002b displayed in the recommended search result area 1002, the mobile phone may display only icons of the recommended search result 1002a and the online search result 1002b in the recommended search result area 1002. Alternatively, the mobile phone may display both icons of the recommended search result 1002a and the online search result 1002b, and a text description of the recommended search result 1002a and a text description of the online search result 1002b in the recommended search result area 1002.

A search word 1003a and an extension field 1003b of the search word 1003a are displayed in the search box 1003. The search word 1003a is entered by the user on the first search interface, and "Electronic" is used as an example in FIG. 10A. The extension field 1003b is obtained by the mobile phone through extension based on the search word. For example, a first recommendation result obtained by the mobile phone based on the search word "Electronic" and the habit of using the mobile phone by the user is an Email application. In this case, the mobile phone may display the extension field 1003b as "mail-Go", to notify the user that a recommended search result with a highest recommendation degree is the Email application.

For example, in the recommended search result area 1002, an icon of the recommended search result with the highest recommendation degree, for example, the Email application, is highlighted, or is in a selection box covering state, to notify the user that the recommended search result with the highest recommendation degree is the Email application.

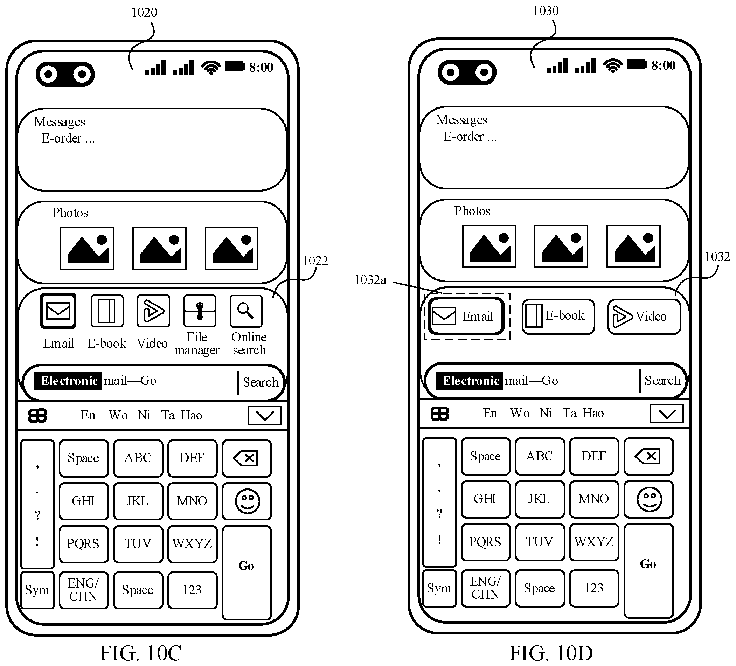

An input key, for example, an "ABC" input key or a "TUV" input key, is displayed on the keyboard control 1004. A function key 1004a, for example, a "Go" key, is further displayed on the keyboard control 1004. It should be noted that, compared with a function key in FIG. 9, on the second search interface corresponding to FIG. 10A, FIG. 10B, FIG. 10C, and FIG. 10D, because the user enters the search word and the mobile phone obtains the recommendation result, a text element displayed on a function control changes from "Search" corresponding to the search box to "Go" corresponding to the recommendation result. That is, the text element displayed on the function control changes in response to a change in a search word entered by the user. In addition, the mobile phone opens the highlighted application in response to a tap operation or a touch-and-hold operation on the "Go" key, or the mobile phone opens the application in the selection box covering state in response to a tap operation or a touch-and-hold operation on the "Go" key.

It should be understood that the extension field 1003b is optional. In some embodiments, the extension field 1003b may alternatively not be displayed on the second search interface. In addition, the keyboard control 1004 may alternatively be a 26-key keyboard control or another keyboard control, for example, a 13-key keyboard control.

In some embodiments, an interface element displayed in the recommended search result area may be referred to as a first interface element or a third interface element, and an interface element displayed in the local search result area may be referred to as a second interface element or a fourth interface element. In addition, the first interface element/third interface element includes an application search result, or the first interface element/third interface element includes an interface element of an application search result and an interface element of an application data search result; and the second interface element/fourth interface element initially includes an interface element of an application data search result. The interface element may be a text description and/or an icon.

On the second search interface, because the recommended search result area is above the search box rather than at the top of the second search interface, a location of the recommended search result area on the display better conforms to a one-hand operation habit of the user. To be specific, the user can easily tap the recommended search result area when the user operates the mobile phone with one hand. In this way, the user can easily select and open, through a one-hand operation, a search result that the user wants to open. This improves user experience.

It should be understood that, in some implementations, on the second search interface, a second search interface 1010 includes, in a top-to-bottom order, a local search result area, a search box, a recommended search result area, and a keyboard control. To be specific, the recommended search result area is displayed below the search box. Similarly, the user can easily select and open, through a one-hand operation, a search result that the user wants to open. This improves user experience

In some other implementations, as shown in FIG. 10B, the second search interface 1010 includes, in a top-to-bottom order, a local search result area, a search box, and a keyboard control. The mobile phone displays a recommended search result area 1012 on the left or the right (on the left as shown in FIG. 10B) of the keyboard control. Recommendation results in the recommended search result area are arranged vertically. A recommended search result with a high recommendation degree is arranged above, and a recommended search result with a low recommendation degree is arranged below. In this way, the user can also easily select and open, through a one-hand operation, a search result that the user wants to open.

Optionally, the mobile phone may choose to display the recommended search result area 1012 on the left or the right of the keyboard control based on handedness of the user. The handedness of the user includes left handedness or right handedness. For example, if the user is left-handed, the recommended search result area is displayed on the left of the keyboard control; or if the user is right-handed, the recommended search result area is displayed on the right of the keyboard control. The handedness of the user may be preset by the user on the mobile phone. In a possible implementation, an icon of a recommended search result and a text description corresponding to the recommended search result may be displayed in the recommended search result area on the second search interface. For example, as shown in FIG. 10C, the mobile phone displays a second search interface 1020. The second search interface 1020 includes a recommended search result area 1022. An icon of a recommended search result and a text description corresponding to the recommended search result are displayed in the recommended search result area 1022, and an icon of an online search option and a text description corresponding to the online search option are displayed in the recommended search result area 1022. In this implementation, the icon of the recommended search result and the text description corresponding to the recommended search result are displayed, so that the user can intuitively view the recommended search result displayed on the mobile phone.

In another possible implementation, a recommended search result in a capsule form may be displayed in the recommended search result area on the second search interface. The recommended search result in a capsule form includes an icon of the recommended search result and a text description corresponding to the recommended search result. For example, as shown in FIG. 10D, the mobile phone displays a second search interface 1030. The second search interface 1030 includes a recommended search result area 1032. A recommended search result 1032a in a capsule form is displayed in the recommended search result area 1032. The recommended search result 1032a includes an icon and a text description that correspond to the recommended search result, for example, an icon of "Email" and a text description of "Email". It can be understood that, in the recommended search result area 1032, a leftmost recommended search result in a capsule form may be in a selection box covering state or a highlighted state. In this implementation, the capsule form may carry a large amount of visual information, and the capsule form has strong interactivity. Therefore, by displaying the recommended search result in the capsule form, a quantity of visual information displayed in the recommended search result area can be increased, and interactivity can be improved.

In some other implementations, the online search option 1002b may alternatively be displayed in the local search result area, or may be displayed in neither of the local search result area and the recommended search result area.

In some other implementations, the mobile phone may alternatively record a quantity of times of tapping the online search option 1002b by the user on the second search interface. If the quantity of times of tapping the online search option 1002b is large, for example, is more than 40% or 50% of a total quantity of times of tapping the online search option 1002b on the second search interface, the mobile phone may display the online search option 1002b in the recommended search result area. In some embodiments, after the mobile phone displays the second search interface, the mobile phone displays a third search interface in response to a slide-left operation performed by the user in the recommended search result area. In this way, more recommended search results can be displayed in the recommended search result area, to increase a quantity of recommended search results displayed on the mobile phone.

In some embodiments, the user may further trigger a slide operation on the second search interface, and the mobile phone displays a third search interface in response to the slide operation. More recommended search results are displayed in a recommended search result area on the third search interface compared with a result area on the second search interface. The more recommended search results may be understood as recommended search results that are not displayed in the recommendation result area on the second search interface but are displayed in the third recommended search result area.

In some embodiments, the third search interface may also be referred to as a third interface.

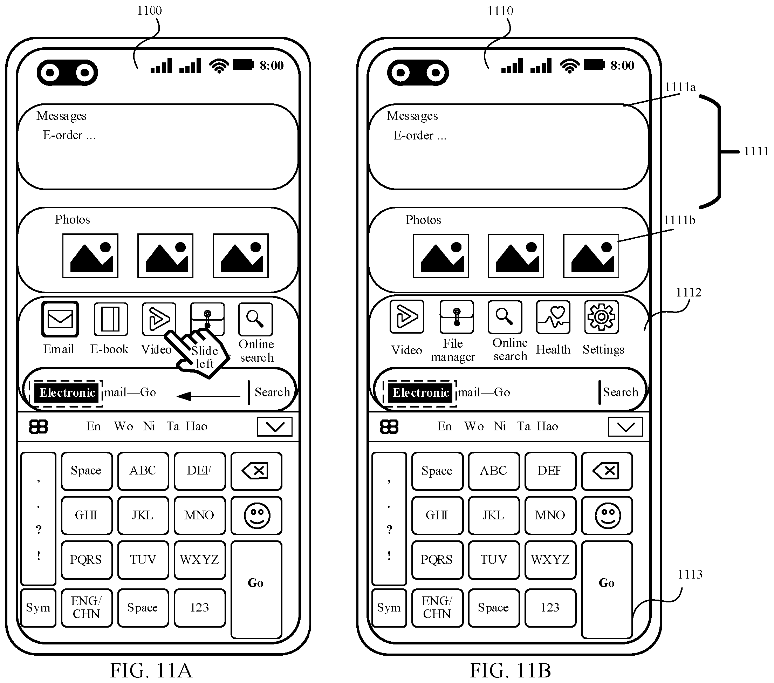

For example, as shown in FIG. 11A and FIG. 11B, the mobile phone displays a third search interface 1110 in response to a slide operation triggered by the user for a recommended search result in a recommended search result area on a second search interface 1100. During the slide operation, the recommended search result slides along with a real-time touch location of the slide operation. In addition, a quantity, for example, 5, of recommended search results of a recommended search result area thread remains unchanged.

The third search interface includes a local search result area 1111 and a recommended search result area 1112. For detailed descriptions of the local search result area 1111, refer to the descriptions corresponding to FIG. 10A, FIG. 10B, FIG. 10C, and FIG. 10D. Details are not described herein again. The recommended search result area 1112 includes a Video application search result, a File manager search result, an Online search option, a Health application search result, and a Settings application search result.

It should be understood that, during actual use, the slide operation may be a slide (swipe)-left operation, a slide (swipe)-right operation, a slide (swipe)-up operation, a slide (swipe)-down operation, or the like. This may be specifically set according to an actual use requirement. In FIG. 11A, the slide operation is shown as slide-left. This may be specifically designed according to an actual use requirement.

It should be understood that the third search interface may alternatively have other different designs. For example, an interface element corresponding to a local search result displayed in the local search result area is displayed in the recommended search result area. It should be understood that a quantity of recommended search results for a specific search word may be limited. Therefore, if the user triggers a slide operation on the second search interface for a plurality of times, or a distance of a slide operation is long, or the mobile phone obtains a few recommended search results based on a search word, a quantity of recommended search results is insufficient. In this case, the mobile phone may display, in the recommended search result area, an interface element corresponding to a local search result.

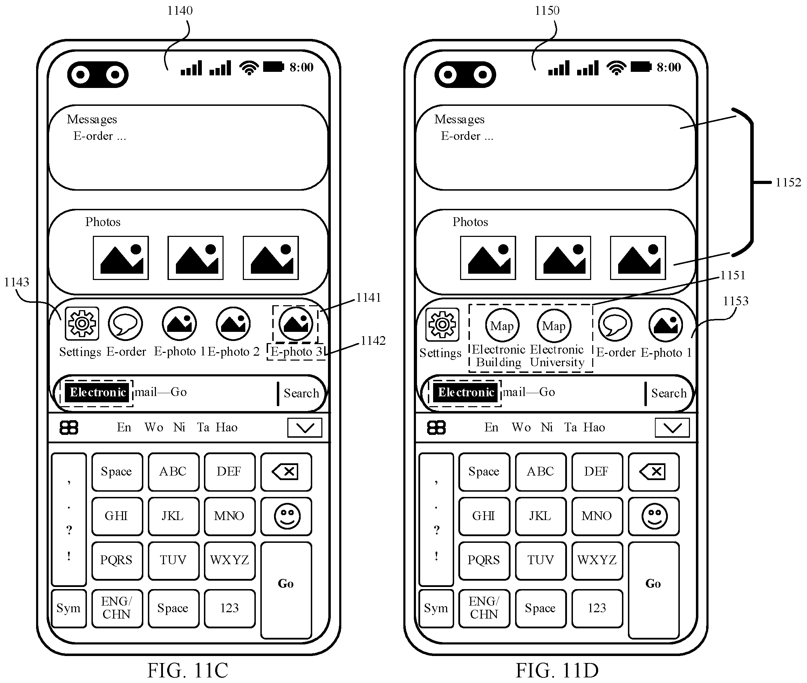

For example, as shown in FIG. 11A and FIG. 11C, the mobile phone displays a third search interface 1140 in response to a slide operation triggered by the user for a recommended search result in a recommended search result area on a second search interface 1100. An icon and a text description that correspond to the recommended search result, for example, an icon and a text description that correspond to a Settings application, are displayed in a recommended search result area 1143 on the third search interface 1140. In addition, an icon and a text description that correspond to a local search result are further displayed in the recommended search result area 1143. For example, as shown in FIG. 11C, an icon and a text description that correspond to a Messages application data search result are displayed in the local search result area. For another example, an icon 1141 and a text descriptions 1142 that correspond to a Photos application data search result are displayed in the local search result area. It should be understood that, in a scenario shown in FIG. 11C, in the recommended search result area 1143, the icon corresponding to the recommended search result and the icon corresponding to the local search result may be distinguished by borders of the icons. For example, borders of the icon corresponding to the recommended search result are a square, and borders of the icon corresponding to the local search result are a circle. In addition, the text description corresponding to the recommended search result and the text description corresponding to the local search result may be distinguished by colors, fonts, sizes, or the like of the text descriptions. In this way, the user can intuitively distinguish between the recommended search result and the local search result that are displayed in the recommended search result area.

For still another example, as shown in FIG. 11A and FIG. 11D, the mobile phone displays a third search interface 1150 in response to a slide operation triggered by the user for a recommended search result in a recommended search result area on a second search interface 1100. An icon and a text description that correspond to the recommended search result and an icon and a text description that correspond to a local search result 1151 are displayed in a recommended search result area 1153 on the third search interface 1150. The local search result 1151 is not displayed in a local search result area 1152. To be specific, a local search result displayed in the recommended search result area 1153 on the third search interface 1150 may be different from a local search result displayed in the local search result area 1152 on the third search interface 1150. To be specific, a local search result may be differentially displayed in the local search result area and the recommended search result area on the third search interface. In this way, content displayed in the recommended search result area can be enriched. For example, the local search result 1151 is not displayed in the local search interface area 1152. This can further increase a quantity of interface elements displayed in the recommended search result area, to increase a quantity of search results that can be selected by the user in the recommended search result area, and improve user experience.

In some embodiments, if an icon corresponding to a recommended search result is displayed in the recommended search result area on the second search interface of the mobile phone but no text description corresponding to the recommended search result is displayed, in response to a touch operation on the recommended search result area, the mobile phone may display, in the recommended search result area on the second search interface, the icon and a text description that correspond to the recommended search result. To be specific, in response to the touch operation on the recommended search result area, the text description corresponding to the recommended search result is additionally displayed in the recommended search result area.

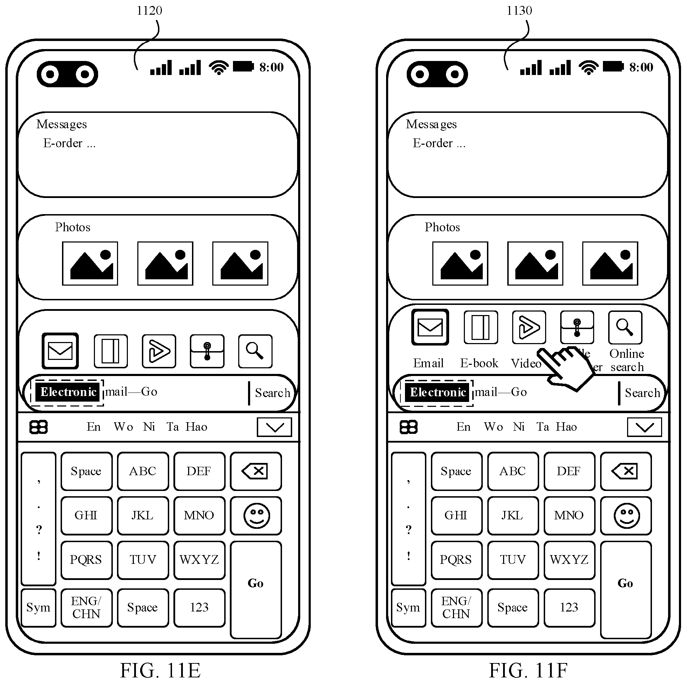

For example, as shown in FIG. 11E, the mobile phone displays a second search interface 1120, and in a recommended search result area on the second search interface 1120, an icon corresponding to a recommended search result is displayed, but no text description corresponding to the recommended search result is displayed. Then, as shown in FIG. 11F, in response to a touch operation on the recommended search result area, the mobile phone additionally displays, in a recommended search result area on a second search interface 1130, a text description corresponding to the recommended search result.

Optionally, a slide operation may include a screen touching part and a sliding part. In response to the screen touching part, the mobile phone may display an icon and a text description of a recommended search result in the recommended search result area. Then, in response to the sliding part, the mobile phone enables the recommended search result to slide along with a real-time touch location of the sliding part. In addition, a preset quantity (5 as shown in the figure) of recommended search results are kept to be displayed in the recommended search result area. After the sliding part ends, the mobile phone displays the third search interface.

It should be understood that, because the screen touching part of the slide operation is similar to a touch operation, if an icon corresponding to a recommended search result is displayed in the recommended search area on the second search interface but no text description corresponding to the recommended search result is displayed, in response to the screen touching part of the slide operation, a text description corresponding to the recommended search result is additionally displayed in the recommended search result area on the second search result interface.

S502: The mobile phone opens a recommended search result in response to a tap operation performed by the user on the recommended search result.

For example, the mobile phone opens an Email application in response to a tap operation performed by the user on an Email icon in FIG. 11A. For another example, the mobile phone opens a Video application in response to a tap operation performed by the user on a Video icon in FIG. 11B.

In a possible implementation, the user may alternatively open a recommended search result by using a keyboard control on a search interface.

For example, in FIG. 11A, the mobile phone opens the Email application in response to a tap operation performed by the user on a function key on a keyboard control.

It can be learned from the figure that the keyboard control is usually displayed at a lower part of the display of the mobile phone. This better conforms to the one-hand operation habit of the user. To be specific, when the user operates the mobile phone with one hand, the user can easily tap a function key on the keyboard control through a one-hand operation. In this way, the user can easily select and open a search result through a one-hand operation.

Still refer to FIG. 11A, FIG. 11B, FIG. 11C, FIG. 11D, FIG. 11E, and FIG. 11F. It should be noted that, in some embodiments, after the user triggers the slide operation, an extension field in a search box on the second search interface 1100 remains unchanged, and a function key 1113 on the keyboard control also remains unchanged. To be specific, on the second search interface 1100 and the third search interface 1110, the function key 1113 and the extension field remain the same, and the mobile phone opens the Email application in response to a tap operation performed by the user on the function key 1113.

It should be understood that the mobile phone may also open a local search result in response to a tap operation performed by the user on the local search result. For example, as shown in FIG. 11B, in response to a tap operation performed by the user on a photo search result 1111b in the local search result, the mobile phone displays a photo preview interface corresponding to the photo search result 1111b. For another example, as shown in FIG. 11B, in response to a tap operation performed by the user on an SMS message search result 1111a, the mobile phone displays an SMS message preview interface corresponding to the SMS message search result 1111a.

**In** some embodiments, when the mobile phone displays a search interface, the user may further control, by using a function key on a keyboard control, a recommended search result in a recommended search result area to move, to select the recommended search result. Then the user opens the recommended search result by using the function key.

**In** this way, the user can select different recommended search results through switching by using function keys on the keyboard control, and can conveniently open different recommended search results. This better conforms to the one-hand operation habit of the user, and can improve user experience.

For example, it is assumed that the mobile phone displays the second search interface 1000 in FIG. 10A. Then displayed content (for example, the recommended search result 1002a and the online search option 1002b) in the recommended search result area 1002 moves in response to a touch-and-hold and slide operation performed by the user on the function key 1004a on the keyboard control 1004, and the mobile phone opens the currently selected recommended search result 1002a in response to an operation of stopping touch-and-hold and sliding. The touch-and-hold and slide operation may be understood as an operation of performing pressing and keeping pressing for more than a preset time threshold, and then performing sliding while keeping pressing. The operation of stopping touch-and-hold and sliding may be understood as an operation of stopping pressing after the touch-and-hold and slide operation.

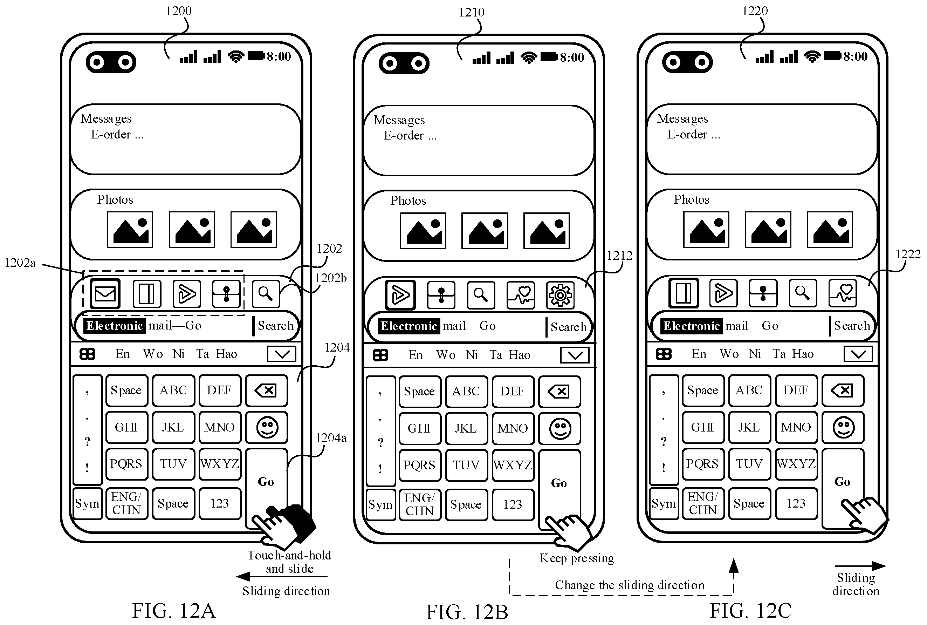

For example, as shown in FIG. 12A, the mobile phone displays a second search interface 1200, and displayed content in a recommended search result area 1202 moves in response to a touch-and-hold and slide operation performed by the user on a function key 1204a on a keyboard control 1204, where a moving direction is the same as a sliding direction of the touch-and-hold and slide operation. For example, the sliding direction of the touch-and-hold and slide operation is the left, as indicated by an arrow in FIG. 12A, and a recommended search result 1202a and an online search option 1202b move to the left. As shown in FIG. 12B, the mobile phone displays a second search interface (design 1) 1210, and in a recommended search result area 1212, displayed content on the leftmost remains in a selection box covering state. In this case, the touch-and-hold and slide operation remains in a pressing state. If the user stops the touch-and-hold and slide operation, the mobile phone opens a recommended search result in a selection box covering state, for example, a Video application shown in FIG. 12B. Then the sliding direction of the touch-and-hold and slide operation changes, for example, changes to sliding rightward, and the touch-and-hold and slide operation remains in a pressing state. Displayed content in the recommended search result area 1212 moves to the right. As shown in FIG. 12C, the mobile phone displays a second search interface (design 2) 1220, and in a recommended search result area 1222, displayed content on the leftmost remains in a selection box covering state. If the user stops the touch-and-hold and slide operation, the mobile phone opens a recommended search result in a selection box covering state, for example, an E-book application shown in FIG. 12C.

In some other embodiments, when the mobile phone displays a search interface, the user may further control, by using a function key on a keyboard control, a status of a recommended search result on the search interface to change. The status change may be understood as whether to change to a selection box covering state or whether to change to a highlighted state. Then the user opens the recommended search result by using the function key.

In this way, the user can select different recommended search results through switching by using function keys on the keyboard control, and can conveniently open different recommended search results. This better conforms to the one-hand operation habit of the user, and can improve user experience.

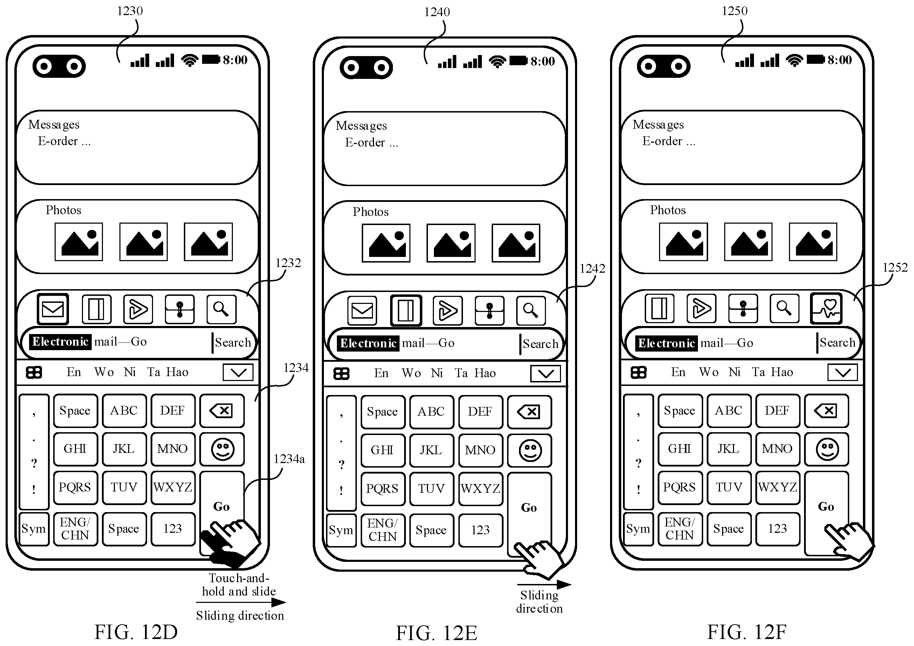

For example, as shown in FIG. 12D, the mobile phone displays a second search interface 1230. In response to a touch-and-hold and slide operation performed by the user on a function key 1234a on a keyboard control 1234, a status of whether a recommended search result in a recommended search result area 1232 is covered by a selection box changes. For example, a current recommended search result in a selection box covering state changes to a non-selection box covering state; or a recommended search result on a target side of a current recommended search result in a selection box covering state changes to a selection box covering state. A direction of the target side relative to the current recommended search result in the selection box covering state is the same as a sliding direction of the touch-and-hold and slide operation on the function key. For example, if the sliding direction of the touch-and-hold and slide operation is the right, the recommended search result on the target side of the current recommended search result in the selection box covering state changes to the selection box covering state. For example, as shown in FIG. 12E, the mobile phone displays a second search interface 1240. In a recommended search result area 1242 on the second search interface 1240, because the user triggers the touch-and-hold and slide operation on the function key 1234a on the second search interface 1230 and the sliding direction is sliding rightward, a recommended search result corresponding to the E-book application on the second search interface 1240 is in a selection box covering state. Then, as shown in FIG. 12F, the user keeps the touch-and-hold and slide operation, to be specific, keeps pressing and keeps the sliding direction to be the right. The mobile phone displays a second search interface 1250. In a recommended search result area 1252 on the second search interface 1250, a recommended search result in a selection box covering state is located on the rightmost. Then, if the user continues to keep the sliding direction to be the right, the mobile phone additionally displays a recommended search result on the second search interface 1250, and the additionally displayed recommended search result is in a selection box covering state.

In some embodiments, in step S502, the mobile phone may alternatively display another search interface other than the second search interface in response to the search operation of the user. On the another search interface, the mobile phone may further display, around a keyboard control, an interface element corresponding to the local search result and/or an interface element corresponding to the recommended search result. For example, an icon corresponding to the recommended search result may be displayed around an input selection box on the keyboard control. For another example, an icon corresponding to the recommended search result may be displayed around a function key on the keyboard control. For another example, a grid layout corresponding to the recommended search result may be displayed on the keyboard control. In this way, the user can select and open a search result based on the interface element through a one-hand operation. This can improve user experience.

In a possible implementation, the mobile phone may display a fourth search interface in response to the search operation of the user. The fourth search interface includes a keyboard control, and an interface element corresponding to the recommended search result and/or an interface element corresponding to the local search result are/is displayed around an input selection box on the keyboard control. The interface element may be an icon, or an icon and a corresponding text description.

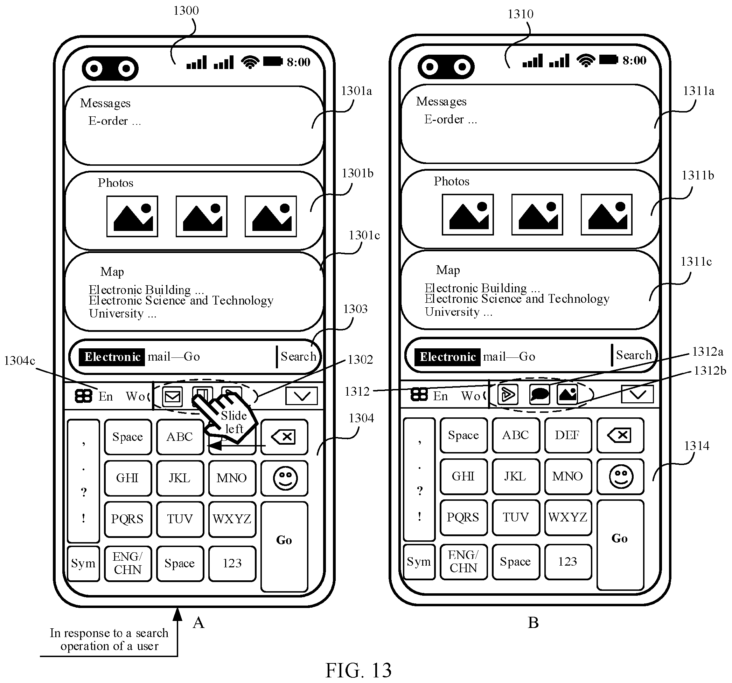

For example, as shown in a part A of FIG. 13, the mobile phone displays a fourth search interface 1300 in response to the search operation of the user. The fourth search interface 1300 includes an SMS message search result 1301a, a photo search result 1301b, a map search result 1301c, a search box 1303, and a keyboard control 1304. The keyboard control 1304 includes an input selection box 1304c and a recommended search result area 1302. For detailed descriptions of the local search result area 1301, the recommended search result area 1302, the search box 1303, and the keyboard control 1304, refer to the text descriptions corresponding to FIG. 7A, FIG. 7B, FIG. 7C, FIG. 7D, FIG. 10A, FIG. 10B, FIG. 10C, and FIG. 10D. Details are not described herein again. An icon corresponding to a recommended search result may be displayed in the recommended search result area 1302. Alternatively, a text description corresponding to a recommended search result may be displayed in the recommended search result area 1302.

On the fourth search interface 1300, the icon of the recommended search result is on the left or the right (the right as shown in FIG. 13) of the input selection box 1304c on the keyboard control 1304, and the recommended search result area and the input selection box are combined into one line for display. It is assumed that five candidate words are displayed in an input selection box on a keyboard control of the mobile phone before the mobile phone displays the fourth search interface 1300. In this case, after a recommended search result area and the input selection box are combined into one line for display, fewer than five, for example, three or two, candidate words are displayed in the input selection box. In this way, saved display space can be used for displaying the recommended search result area.

It can be understood that, on the fourth search interface, the keyboard control includes the input selection box and the icon corresponding to the recommended search result, and the keyboard is usually displayed at a lower part of the mobile phone. Therefore, the user can perform, through a one-hand operation, a tap operation on the icon that corresponds to the recommended search result and that is included in the keyboard control. In this way, the user can conveniently select and enter the recommended search result through a one-hand operation.

For another example, as shown in the part A of FIG. 13, in response to a slide operation on the recommended search result area 1302 on a fourth search interface 1300, a recommended search result moves along with a real-time touch location of the slide operation, and a quantity of recommended search results remains at a fixed value, for example, 4, during the movement. In addition, an icon corresponding to the local search result is displayed if a quantity of recommended search results is insufficient. As shown in a part B of FIG. 13, the mobile phone displays a fifth search interface 1310 in response to ending of the slide operation. The fifth search interface 1310 includes an SMS message recommendation result 1311a, a photo recommendation result 1311b, a map recommendation result 1311c, and a keyboard control 1314. The keyboard control 1314 includes a recommended search result area 1312, and the recommended search result area includes an SMS message icon 1312a and a photo icon 1312b. The SMS message icon 1312a has a correspondence with the SMS message recommendation result 1311a. The photo icon 1312b has a correspondence with the photo recommendation result 1311b. To be specific, if the SMS message icon 1312a is tapped, the mobile phone may jump to content corresponding to the SMS message recommendation result 1311a; or if the photo icon 1312b is tapped, the mobile phone may jump to content corresponding to the photo recommendation result 1311b. It can be understood that the keyboard control includes an icon corresponding to a local search result (for example, the SMS message recommendation result 1311a or the photo recommendation result 1311b) displayed at an upper part of the fifth search interface, and the keyboard control is usually displayed at a lower part of the mobile phone. Therefore, the user can conveniently perform, through a one-hand operation, a tap operation on the icon that corresponds to the local search result and that is included in the keyboard control. In this way, the user can conveniently select and enter the local search result through a one-hand operation.

It should be noted that a display order of icons that correspond to local search results and that are included in the keyboard control on the fifth search interface may or may not correspond to a display order of the local search results included in the fifth search interface on the mobile phone. For example, as shown in the part B of FIG. 13, on the fifth search interface, the SMS message recommendation result 1311a, the photo recommendation result 1311b, and the map recommendation result 1311c are displayed in a top-to-bottom order. In the recommended search result area 1312 included in the keyboard control 1314, an icon 1312a corresponding to the SMS message recommendation result and an icon 1312b corresponding to the photo recommendation result are displayed in a left-to-right order. It can be learned that the top-to-bottom order has a correspondence with the left-to-right order. This conforms to intuitive feelings of the user on an interface, and can improve user experience For another example, in some other implementations, it is assumed that the SMS message recommendation result, the photo recommendation result, and the map recommendation result are displayed in a top-to-bottom order on the fifth search interface. In the recommended search result area included in the keyboard control, icons corresponding to the SMS message recommendation result, the photo recommendation result, and the map recommendation result may be reordered based on recommendation degrees of a Messages application, a Photos application, and a Map application. For example, in the recommended search result area included in the keyboard control, a recommendation result with a high recommendation degree is displayed on the left, and a recommendation result with a not quite high recommendation degree is displayed on the right. This can conform to a habit of using the mobile phone by the user, and can also improve user experience.

In another possible implementation, after the mobile phone displays a recommended search result, in response to a touch-and-hold operation on a function key on a keyboard, the mobile phone may display, near the function key, an interface element corresponding to the recommended search result and/or an interface element corresponding to a local search result.

An interface on which the mobile phone displays the recommended search result may be the interfaces corresponding to FIG. 2, the interfaces corresponding to FIG. 10A, FIG. 10B, FIG. 10C, and FIG. 10D, or other interfaces that are not shown in the foregoing figures and that display the recommended search result. The following describes this implementation by using the interfaces corresponding to FIG. 2.

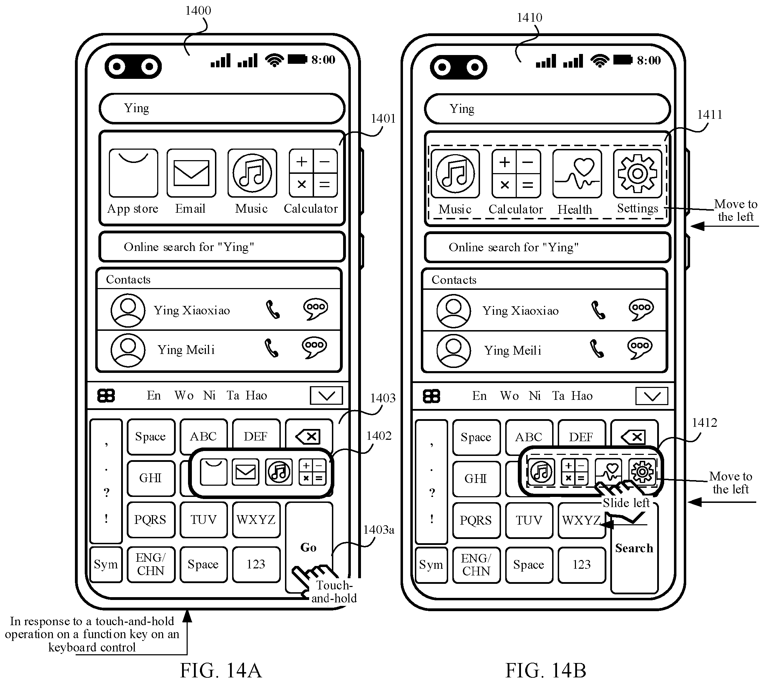

In an example, as shown in FIG. 14A, the mobile phone displays a search interface 1400. The search interface 1400 includes a recommended search result area 1401. The recommended search result area 1401 includes a plurality of recommended search results, for example, an "App store" search result, an "Email" search result, a "Music" search result, and a "Calculator" search result. Then, in response to a touch-and-hold operation on a function key 1403a on a keyboard control 1403, the mobile phone displays a search pop-up window 1402 around the function key 1403a. The search pop-up window 1402 includes a plurality of interface elements, for example, icons, or icons and text descriptions corresponding to the icons. The interface elements have correspondences with the recommended search results included in the recommended search result area 1401, for example, are icons corresponding to the recommended search results included in the recommended search result area 1401. Then, in response to a tap operation on an icon included in the search pop-up window 1402, the mobile phone opens a search result corresponding to the icon.

It can be understood that, in this example, the search pop-up window is displayed around the function key, and the interface elements included in the search pop-up window have correspondences with the recommended search results, so that the user can conveniently select and open a recommended search result in the search pop-up window through a one-hand operation. This can enable the user to more conveniently operate the mobile phone, and can improve user experience.

In some examples, in response to a slide operation on the search pop-up window 1402, the icons included in the search pop-up window 1402 move along with a real-time touch location of the slide operation. It can be understood that, during sliding of the icons included in the search pop-up window 1402, the recommended search results included in the recommended search result area may also slide along with the icons included in the search pop-up window 1402. In some other examples, the icons and the recommended search results may alternatively not slide together. In the following examples, that the icons and the recommended search results slide together is used for description.

In another example, based on the search interface 1400 shown in FIG. 14A, the mobile phone displays another search interface 1410, as shown in FIG. 14B. In response to a slide operation, for example, sliding leftward, on a search pop-up window 1412, icons included in the search pop-up window 1412 slide along with a real-time touch location of the slide operation. In addition, during sliding of the icons included in the search pop-up window 1412, recommended search results included in a recommended search result area 1411 also slide together, and a speed at which the icons included in the search pop-up window 1412 slide corresponds to a speed at which the recommended search results included in the recommended search result area 1411 slide. In this way, the user can conveniently select and open more search results by using the search pop-up window 1412.

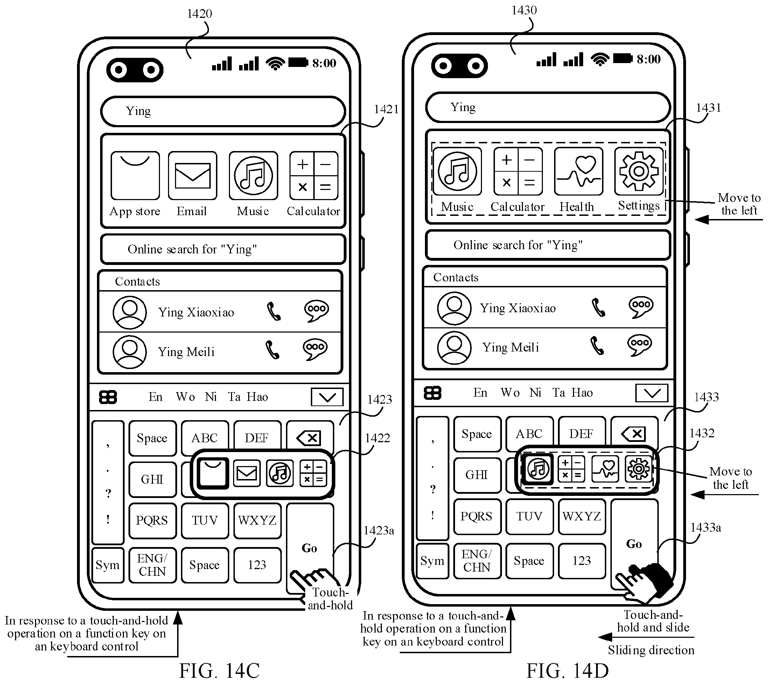

In still another example, as shown in FIG. 14C, in response to a touch-and-hold operation on a function key 1423a on a keyboard control 1423, the mobile phone displays a search pop-up window 1422 around the function key 1423a. The search pop-up window 1422 includes a plurality of icons. The icons have correspondences with recommended search results in a recommended search result area 1421 included in a search interface 1420. A leftmost icon among the plurality of icons included in the search pop-up window 1422 is in a selected state, for example, is covered by a selection box, or is displayed in a highlighted state. If the touch-and-hold operation is stopped in this case, to be specific, if pressing on a screen is stopped, the mobile phone opens a recommended search result corresponding to the icon in the selected state, for example, opens an "App store" application. In this way, the user can conveniently select and open a search result based on the search pop-up window through a one-hand operation. This can improve user experience.

In an example, as shown in FIG. 14D, in response to a touch-and-hold and slide operation on a function key 1433a on a keyboard control 1433, the mobile phone displays a search pop-up window 1432 around the function key 1433a. The search pop-up window 1432 includes a plurality of icons. The icons have correspondences with recommended search results in a recommended search result area 1431 included in a search interface 1430. A leftmost icon among the plurality of icons included in the search pop-up window 1432 is in a selected state, for example, is covered by a selection box, as shown in the figure. In addition, the icons included in the search pop-up window 1432 move, and a moving direction is the same as a sliding direction of the touch-and-hold and slide operation. In addition, during movement of the icons included in the search pop-up window 1432, the leftmost icon remains in the selected state. Then, in response to an operation of stopping touch-and-hold and sliding, namely, an operation of stopping pressing the screen, the mobile phone opens a recommended search result corresponding to the icon in the selected state, for example, the "Music" search result, as shown in FIG. 14D. In this way, the user can conveniently select and open a search result based on the search pop-up window through a one-hand operation. This can improve user experience.

It should be noted that, in this example, during movement of the icons included in the search pop-up window 1432, the recommended search results in the recommended search result area 1431 may also move together. This can improve a correspondence between interface movements on the search interface, and can improve user experience.

It should be understood that, in the examples corresponding to FIG. 14A, FIG. 14B, FIG. 14C, and FIG. 14D, the search pop-up window may include a plurality of touch areas, and the touch areas are in a one-to-one correspondence with the recommended search results in the recommended search result area. To be specific, an operation on a touch area is equivalent to an operation on a recommended search result corresponding to the touch area. In this way, a search result can be selected and opened based on the search pop-up window, and user experience can be improved. It should be noted that icons and/or text descriptions of the recommended search results may be displayed in the search pop-up window, so that the user can have intuitive visual experience on the search pop-up window. Alternatively, no icon and/or text description may be displayed, and an empty search pop-up window is displayed, so that resource consumption of a processor of the mobile phone can be reduced. Content displayed in the search pop-up window may be specifically designed according to an actual use requirement.

In some embodiments, all of the search interface 1400, the search interface 1410, the search interface 1420, and the search interface 1430 in FIG. 14A, FIG. 14B, FIG. 14C, and FIG. 14D may be referred to as a sixth interface.

In still another possible implementation, after the mobile phone displays an interface of a recommended search result, the mobile phone may further display a grid layout on a keyboard control in response to a touch-and-hold operation on a function key on the keyboard. The grid layout corresponds to a layout of a local search result area and/or a layout of a recommended search result area on a search interface. For example, an interface element included in the grid layout corresponds to an interface element included in the local search result area and/or an interface element included in the recommended search result area on the search interface. For another example, an arrangement manner of interface elements included in the grid layout corresponds to an arrangement manner of interface elements included in the local search result area and/or an arrangement manner of interface elements included in the recommended search result area on the search interface.

An interface on which the mobile phone displays the recommended search result may be the interfaces corresponding to FIG. 2, the interfaces corresponding to FIG. 10A, FIG. 10B, FIG. 10C, and FIG. 10D, or other interfaces that are not shown in the foregoing figures and that display the recommended search result. The following describes this implementation by using the interfaces corresponding to FIG. 2 as an example.

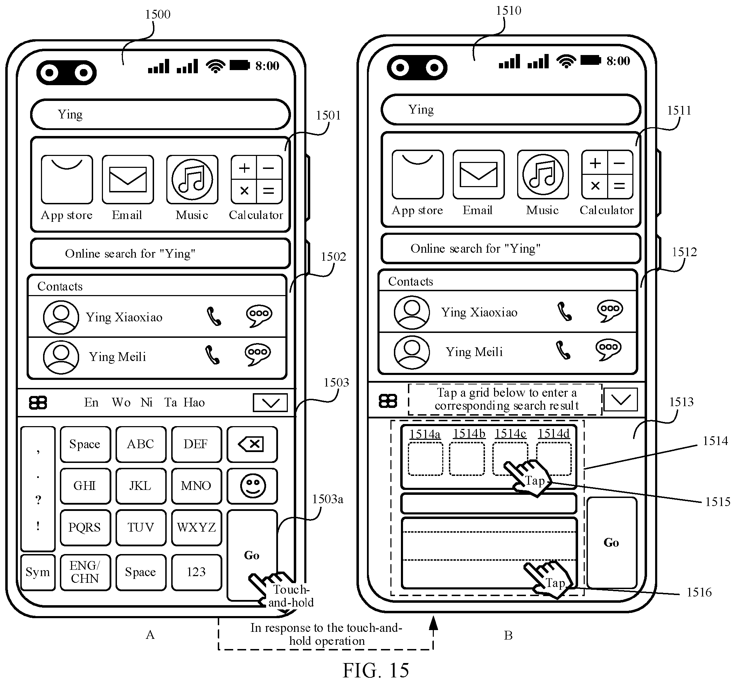

In an example, as shown in a part A of FIG. 15, the mobile phone displays a search interface 1500. The search interface 1500 includes a recommended search result area 1501, a local search result area 1502, and a keyboard control 1503. The keyboard control 1503 includes a function key 1503a. In response to a touch-and-hold operation on the function key 1503a on the keyboard control 1503, the mobile phone displays a grid layout on the keyboard control. The grid layout corresponds to the recommended search result area on the interfaces corresponding to FIG. 2. For the grid layout, refer to a part B of FIG. 15. In the part B of FIG. 15, the mobile phone displays a search interface 1510. The search interface 1510 includes a recommended search result area 1511, a local search result area 1512, and a keyboard control 1513. The keyboard control 1513 includes a grid layout 1514, and the grid layout 1514 corresponds to the recommended search result area 1511 and the local search result area 1512.

In some embodiments, the search interface 1510 in FIG. 15 may also be referred to as a sixth interface.

Specifically, the grid layout 1514 includes a plurality of touch areas, and the touch areas are in a one-to-one correspondence with recommended search results included in the recommended search result area 1511. For example, a touch area 1514a corresponds to the "App store" search result, a touch area 1514b corresponds to the "Email" search result, a touch area 1514c corresponds to the "Music" search result, and a touch area 1514d corresponds to the "Calculator" search result. In addition, the grid layout 1514 may further include a touch area corresponding to the local search result area 1512. In response to a tap operation on a location of a touch area included in the grid layout 1514, the mobile phone opens a search result corresponding to the touch area. For example, in response to a tap operation 1515, where a location of the tap operation 1515 corresponds to the touch area 1514c, and the touch area 1514c corresponds to the "Music" search result, the mobile phone opens the "Music" search result, for example, opens a "Music" application. For another example, in response to a tap operation 1516, where a location of the tap operation 1516 corresponds to a touch area for a local search result "Ying Meili", the mobile phone opens the local search result "Ying Meili", for example, enters a contact interface of "Ying Meili". In this way, the user can conveniently select and open a search result based on the grid layout through a one-hand operation. This can improve user experience.

In some examples, an outline of an icon may be further displayed in the touch area, and the icon is an icon corresponding to the touch area. In this example, the outline of the icon is displayed in the touch area, so that consumption of processor resources of the mobile phone can be reduced, and the user can directly open a search result through the grid layout.

It should be understood that, in the grid layout 1514, an icon and/or a text description of a search result corresponding to each touch area may be displayed at a corresponding location of the touch area. In this way, the user can directly open the search result through the grid layout.

In some examples, a text prompt 1513a may be further displayed at a corresponding location, on the keyboard control 1513, at which an input selection box is originally displayed, to notify the user that an operation of selecting and opening a search result can be triggered through the grid layout 1514.

It should be noted that personal information used in the technical solutions of this application is limited only to information for which individual consent is obtained, including but not limited to reminding and prompting a user to read a related user agreement (notification) and sign the agreement (authorization) that includes authorization of related user information before the user uses the function.

Algorithm steps in examples described with reference to embodiments disclosed in this specification can be implemented by hardware or a combination of hardware and computer software in this application. Whether a function is performed by hardware or hardware driven by computer software depends on particular applications and design constraint conditions of the technical solutions. A person skilled in the art may use different methods to implement the described functions for each particular application with reference to embodiments. However, it should not be considered that the implementation goes beyond the scope of this application.

In embodiments, the electronic device may be divided into functional modules based on the foregoing method examples. For example, each functional module may be obtained through division based on each corresponding function, or two or more functions may be integrated into one processing module. The integrated module may be implemented in a form of hardware. It should be noted that division into the modules in embodiments is an example, and is merely logical function division. During actual implementation, another division manner may be used.

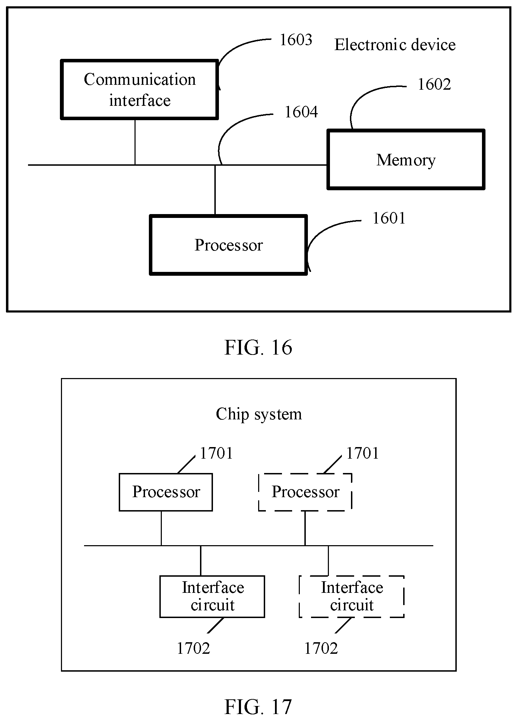

An embodiment of this application further provides an electronic device. As shown in FIG. 16, the electronic device may include one or more processors 1601, a memory 1602, and a communication interface 1603.

The memory 1602 and the communication interface 1603 are coupled to the processor 1601. For example, the memory 1602 and the communication interface 1603 may be coupled to the processor 1601 through a bus 1604.

The communication interface 1603 is configured to perform data transmission with another device. The memory 1602 stores computer program code. The computer program code includes computer instructions. When the computer instructions are executed by the processor 1601, the electronic device is enabled to perform related method steps in the method embodiments of this application.

The processor 1601 may be a processor or a controller, for example, a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processor may implement or execute various example logical blocks, modules, and circuits described with reference to content of the present disclosure. The processor may alternatively be a combination for implementing a computing function, for example, a combination including one or more microprocessors, or a combination of a DSP and a microprocessor.

The bus 1604 may be a peripheral component interconnect (peripheral component interconnect, PCI) bus, an extended industry standard architecture (extended industry standard architecture, EISA) bus, or the like. The bus 1604 may be classified into an address bus, a data bus, a control bus, and the like. For ease of representation, only one bold line is used in FIG. 16 for representation, but this does not mean that there is only one bus or only one type of bus.

An embodiment of this application further provides a chip system. As shown in FIG. 17, the chip system includes at least one processor 1701 and at least one interface circuit 1702. The processor 1701 and the interface circuit 1702 may be interconnected through a line. For example, the interface circuit 1702 may be configured to receive a signal from another apparatus (for example, a memory of a mobile phone). For another example, the interface circuit 1702 may be configured to send a signal to another apparatus (for example, the processor 1701).

For example, the interface circuit 1702 may read instructions stored in the memory of the mobile phone and send the instructions to the processor 1701. When the instructions are executed by the processor 1701, the mobile phone is enabled to perform the steps in the foregoing embodiments.

An embodiment of this application further provides a computer-readable storage medium. The computer-readable storage medium stores computer program code. When the foregoing processor executes the computer program code, the electronic device performs related method steps in the foregoing method embodiments.

An embodiment of this application further provides a computer program product. When the computer program product is run on a computer, the computer is enabled to perform related method steps in the foregoing method embodiments.

The electronic device, the computer-readable storage medium, or the computer program product provided in this application is configured to perform the corresponding methods provided above. Therefore, for beneficial effect that can be achieved, refer to the beneficial effect in the corresponding methods provided above. Details are not described herein again.

Based on the descriptions of the foregoing implementations, a person skilled in the art may clearly understand that, for a purpose of convenient and brief description, division into the foregoing functional modules is merely used as an example for illustration. During actual application, the foregoing functions may be allocated to different functional modules and implemented according to a requirement. In other words, an inner structure of the apparatus is divided into different functional modules to implement all or some of the functions described above.

In the several embodiments provided in this application, it should be understood that the disclosed apparatuses and methods may be implemented in other manners. For example, the described apparatus embodiments are merely examples. For example, division into the modules or the units is merely logical function division. During actual implementation, another division manner may be used. For example, a plurality of units or components may be combined or integrated into another apparatus, or some features may be ignored or not performed. In addition, the shown or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separated, and components shown as units may be one or more physical units, to be specific, may be located in one place, or may be distributed in a plurality of different places. Some or all of the units may be selected according to actual requirements to achieve the objectives of the solutions of embodiments.

In addition, functional units in embodiments of this application may be integrated into one processing unit, or each unit may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions in embodiments of this application essentially, or the part making a contribution, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes any medium that can store program code, for example, a USB flash drive, a removable hard disk drive, a read-only memory (read only memory, ROM), a random access memory (random access memory, RAM), a magnetic disk, or a compact disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An interface display method, wherein the method is applied to an electronic device, and the method comprises:
displaying a first interface;
displaying a second interface in response to a search operation on the first interface, wherein the search operation comprises entering search content, the second interface is an interface for displaying a search result obtained based on the search content, and the search result comprises an application search result and an application data search result, wherein
the second interface comprises a recommended search result area, a display location of the recommended search result area is at the bottom of the second interface, the recommended search result area comprises a first interface element, and the first interface element comprises an interface element of the application search result, or an interface element of the application search result and an interface element of the application data search result; and
in response to a first operation on the first interface element, opening a search result corresponding to the first interface element.

2. The method according to claim 1, wherein the method further comprises:
in response to a first slide operation on the first interface element, changing the first interface element with a change in a real-time touch location of the first slide operation; and
displaying a third interface in response to ending of the first slide operation, wherein the third interface comprises a recommended search result area, and the recommended search result area comprised in the third interface comprises at least one interface element, not displayed on the second interface, of the application search result or the application data search result.

3. The method according to claim 1 or 2, wherein in the recommended search result area, a first interface element at a preset arrangement location is in a first display state, and another first interface element is in a second display state; and the second interface further comprises a first keyboard control, wherein the first keyboard control comprises a first function key; and
the method further comprises:
in response to a second operation on the first function key, opening a search result corresponding to the first interface element in the first display state.

4. The method according to claim 3, wherein the method further comprises:
in response to a touch-and-hold and slide operation on the first function key, sliding the first interface element toward a sliding direction of the touch-and-hold and slide operation, and setting the first interface element at the preset arrangement location in the recommended search result area to the first display state; and
in response to ending of the touch-and-hold and slide operation, opening a search result corresponding to the first interface element in the first display state.

5. The method according to claim 3 or 4, wherein the first display state comprises a highlighted state or a selection box covering state.

6. The method according to any one of claims 1 to 5, wherein the second interface further comprises a local search result area and a search box;
a display location of the local search result area is above the display location of the recommended search result area, a display location of the search box is below the display location of the recommended search result area, and a display location of the first keyboard control is below the search box; and
the local search result area comprises a second interface element, and the second interface element comprises the interface element of the application data search result.

7. The method according to any one of claims 1 to 6, wherein before the displaying a first interface, the method further comprises:
displaying a desktop, wherein the desktop comprises a search button and a status bar; and
the displaying a first interface comprises:
displaying the first interface in response to a tap operation on the search button; and/or
displaying the first interface in response to a pull-down operation triggered in an area on the desktop other than the status bar.

8. The method according to any one of claims 1 to 6, wherein before the displaying a first interface, the method further comprises:
displaying a leftmost home screen, wherein the leftmost home screen comprises a leftmost home screen search box; and
the displaying a first interface comprises:
displaying the first interface in response to a tap operation on the leftmost home screen search box.

9. An interface display method, applied to an electronic device, wherein the method comprises:
displaying a fourth interface;
displaying a fifth interface in response to a search operation on the fourth interface, wherein the search operation comprises entering search content, the fifth interface is an interface for displaying a search result obtained based on the search content, and the search result comprises an application search result and an application data search result, wherein
the fifth interface comprises a recommended search result area, a local search result area, and a second keyboard control, the recommended search result area comprises a third interface element, the local search result area comprises a fourth interface element, the third interface element comprises an interface element of the application search result, or an interface element of the application search result and an interface element of the application data search result, the fourth interface element comprises an interface element of the application data search result, and the second keyboard control comprises a second function key;
displaying a sixth interface in response to a third operation on the second function key, wherein the sixth interface comprises the recommended search result area, the local search result area, and a third keyboard control, the third keyboard control comprises a search pop-up window or a grid layout, the search pop-up window comprises a first touch area, the grid layout comprises a first touch area and a second touch area, the first touch area has a correspondence with the third interface element, and the second touch area has a correspondence with the fourth interface element; and
in response to a tap operation on the first touch area, opening a search result corresponding to the third interface element.

10. The method according to claim 9, wherein the third keyboard control comprises the search pop-up window and a third function key;
in the search pop-up window, a third interface element corresponding to the first touch area is displayed at a location corresponding to the first touch area, a third interface element at a preset arrangement location in the search pop-up window is in a third display state, and a third interface element at another location in the search pop-up window is in a fourth display state; and
the method further comprises:
in response to a tap operation on the third function key, opening the third interface element in the third display state.

11. The method according to claim 10, wherein the method further comprises:
in response to a touch-and-hold and slide operation on the third function key, sliding the third interface element displayed in the search pop-up window toward a sliding direction of the touch-and-hold and slide operation, and setting the third interface element at the preset arrangement location in the search pop-up window to the third display state; and
in response to ending of the touch-and-hold and slide operation, opening the third interface element in the third display state.

12. The method according to claim 10 or 11, wherein the third display state comprises a highlighted state or a selection box covering state.

13. The method according to claim 9, wherein the third keyboard control comprises the grid layout;
in the grid layout, a third interface element corresponding to the first touch area is displayed at a location corresponding to the first touch area; and
in the grid layout, a fourth interface element corresponding to the second touch area is displayed at a location corresponding to the second touch area.

14. The method according to claim 9, wherein the third keyboard control comprises the grid layout, and the third interface element comprises an icon; and
in the grid layout, an outline of an icon corresponding to the first touch area is displayed at a location corresponding to the first touch area.

15. The method according to any one of claims 9 to 14, wherein a display location of the third keyboard control is at the bottom of the sixth interface.

16. The method according to any one of claims 9 to 15, wherein before the displaying a fourth interface, the method further comprises:
displaying a desktop, wherein the desktop comprises a search button and a status bar; and
the displaying a fourth interface comprises:
displaying the fourth interface in response to a tap operation on the search button; and/or
displaying the fourth interface in response to a pull-down operation triggered in an area on the desktop other than the status bar.

17. The method according to any one of claims 9 to 15, wherein before the displaying a fourth interface, the method further comprises:
displaying a leftmost home screen, wherein the leftmost home screen comprises a leftmost home screen search box; and
the displaying a fourth interface comprises:
displaying the fourth interface in response to a tap operation on the leftmost home screen search box.

18. An electronic device, wherein the electronic device comprises a memory, one or more processors, and a camera, the memory is coupled to the processor, the processor is coupled to the camera, the memory stores computer program code, the computer program code comprises computer instructions, and when the computer instructions are executed by the processor, the electronic device is enabled to perform the method according to any one of claims 1 to 17.

19. A computer-readable storage medium, comprising computer instructions, wherein when the computer instructions are run on an electronic device, the electronic device is enabled to perform the method according to any one of claims 1 to 17.
